(19) Europäisches Patentamt / European Patent Office / Office européen des brevets

(11) **EP 2 857 856 B1**

(12) **FASCICULE DE BREVET EUROPEEN**

(45) Date de publication et mention de la délivrance du brevet:
**07.09.2016 Bulletin 2016/36**

(51) Int Cl.:
***G01S 3/74*** *(2006.01)*

(21) Numéro de dépôt: **14187451.1**

(22) Date de dépôt: **02.10.2014**

(54) **Procédé de goniométrie avec un système ayant moins de voies de réception que de capteurs**

Goniometrieverfahren mit einem System, das über weniger Empfangswege als Sensoren verfügt

Goniometry method with a system having fewer receiving channels than sensors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2013 FR 1302313**

(43) Date de publication de la demande:
**08.04.2015 Bulletin 2015/15**

(73) Titulaire: **Thales**
**92200 Neuilly Sur Seine (FR)**

(72) Inventeurs:
- **Ferreol, Anne**
  **92622 Gennevilliers Cedex (FR)**
- **Brugier, Jérémy**
  **92622 Gennevilliers Cedex (FR)**
- **Rogerieux, Gilles**
  **92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 1 903 348     WO-A1-2008/111882**
**US-B2- 7 952 521**

- **WEI WU ET AL: "Switched-Element Direction Finding", IEEE TRANSACTIONS ON AEROSPACE AND ELECTRONIC SYSTEMS, IEEE SERVICE CENTER, PISCATAWAY, NJ, US, vol. 45, no. 3, 1 juillet 2009 (2009-07-01), pages 1209-1217, XP011277363, ISSN: 0018-9251, DOI: 10.1109/TAES.2009.5259194**
- **FRIEDLANDER B ET AL: "Eigenstructure methods for direction finding with sensor gain and phase uncertainties", 19880411; 19880411 - 19880414, 11 avril 1988 (1988-04-11), pages 2681-2684, XP010072819,**

**Description**

L'invention concerne un procédé de goniométrie pour estimer les angles d'arrivées (ou incidences) des sources (« DOA (Direction Of Arrival) estimation » en anglais) de signaux reçus par un système comprenant un nombre de voies de réception inférieur au nombre de capteurs du système.

Le procédé selon l'invention s'applique pour de la goniométrie une dimension 1 D ou deux dimensions 2D.

Il peut aussi être utilisé dans un cas plus général d'estimation de la polarisation conjointement à la direction d'arrivée et peut même concerner le cas de trajets cohérents où il est nécessaire d'estimer conjointement l'incidence et la polarisation de tous les trajets incidents.

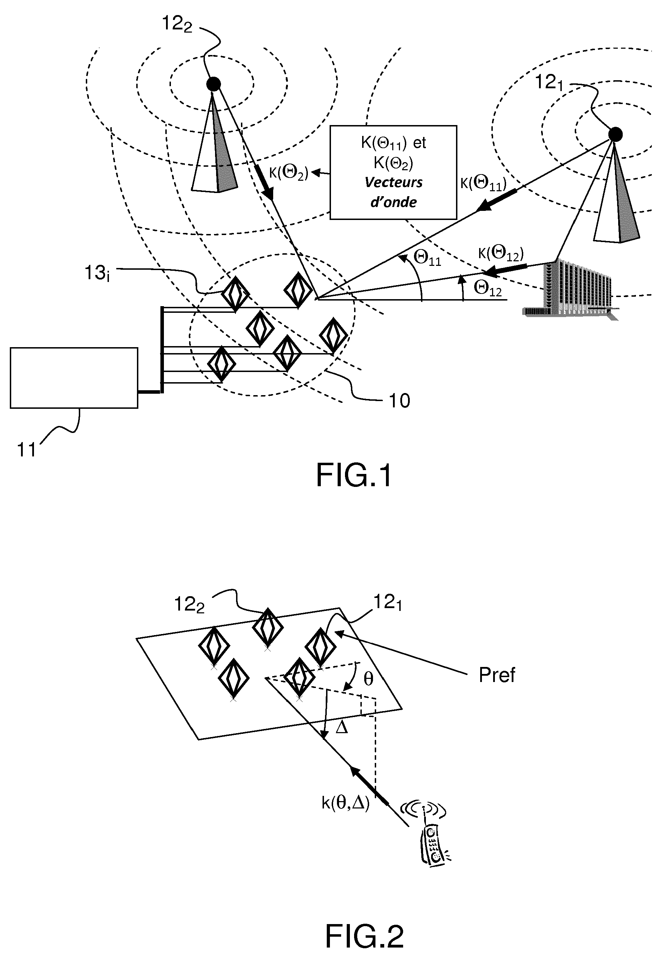

Dans un contexte électromagnétique, les capteurs sont des antennes et les sources radio-électriques se propagent avec une polarisation dépendante de l'antenne d'émission. Dans un contexte acoustique, les capteurs sont des microphones et les sources (ou émetteurs) sont sonores. La figure 1 montre un système de traitement d'antennes composé d'un réseau d'antennes 10 comprenant plusieurs capteurs élémentaires 13i recevant des signaux issus de différentes sources 12i (ou émetteurs) avec des angles d'arrivées $\Theta_{mp}$ différents. Le réseau de capteurs est en liaison avec un dispositif de traitement d'antennes 11. L'objectif des techniques de traitement d'antennes est principalement d'exploiter la diversité spatiale générée par la réception multi-antennes des signaux incidents qui consiste à utiliser la position spatiale des antennes du réseau pour mieux exploiter les divergences en incidence et distance des sources.

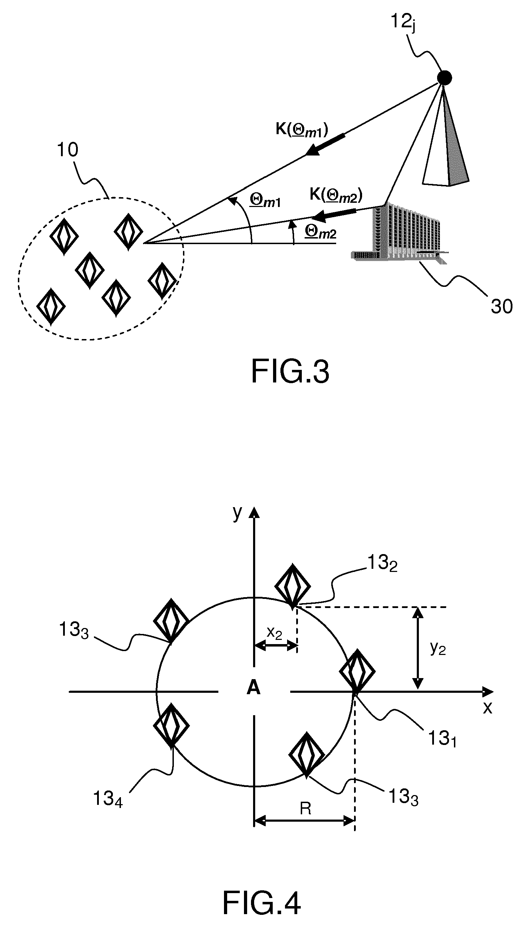

La figure 2 définit l'incidence $\Theta$ d'un émetteur de type mobile à un réseau de capteurs. La goniométrie nécessite la connaissance de la réponse du réseau de capteurs suivant l'incidence. Toutefois cette réponse peut dépendre aussi de paramètres supplémentaires tels que la polarisation. Plus précisément, les capteurs élémentaires du réseau reçoivent les sources avec une phase et une amplitude dépendantes en particulier de l'incidence des émetteurs et de la position des capteurs. Les angles d'incidences sont paramétrés en 1 D par l'azimut $\theta$ et en 2D par le vecteur $\Theta$ dont les composantes sont l'azimut $\theta$ et l'élévation $\Delta$. Une goniométrie 1 D est définie par des techniques qui estiment uniquement l'azimut en supposant que l'élévation est connue. Ceci est le cas d'émetteurs se propageant dans le plan horizontal. Une goniométrie 2D estime conjointement les deux paramètres azimut et élévation. Le contexte de goniométrie est celui d'un canal de propagation en présence de multi-trajets comme illustré sur la figure 3 et la figure 1. La m-ième source se propage suivant P trajets d'incidence $\Theta_{mp}$ ($1 \leq p \leq P$) qui sont générés par $P$-1 obstacles dans l'environnement radioélectriques. Les algorithmes de goniométrie nécessitent l'acquisition simultanée des signaux des capteurs. Cela veut dire que le récepteur doit contenir autant de voies de réception que de capteurs du réseau. Dans un tel contexte les signaux des capteurs sont acquis en permanence sans interruption.

Les systèmes de goniométrie décrits dans l'art antérieur sont généralement des systèmes bi-voies où le nombre de voies de réception vaut deux et où le réseau est composé par exemple de cinq capteurs. Ces systèmes utilisent un algorithme d'interférométrie et ne permettent pas de traiter les cas multi-émetteurs et/ou multi-trajets car ils sont adaptés au contexte mono-source.

Afin de prendre en compte le cas multi-émetteurs et/ou multi-trajets, des algorithmes de goniométries à haute résolution ont été envisagés avec un système de réception bi-voies. Deux alternatives ont été envisagées: une première solution exploite la structure d'un vecteur observation composé par les intercorrélations des signaux de deux voies issus de plusieurs commutations, en estimant conjointement la direction d'arrivée de chacune des sources. Cela nécessite le calcul d'un critère multi-dimensionnel coûteux en temps de calcul. De façon à réduire ce coût de calcul, une seconde alternative exploite la diversité spectrale des émetteurs afin d'appliquer un algorithme de type MUSIC connu de l'homme du métier. Il est aussi connu d'utiliser la connaissance d'un signal de référence d'un des émetteurs afin d'extraire des différentes acquisitions bi-voies une matrice de canal multi-voies où un algorithme de type MUSIC est applicable pour estimer la direction d'arrivée de chacun des trajets de l'émetteur. L'un des problèmes est d'avoir un signal disponible. En dehors du procédé qui nécessite la connaissance d'un signal de référence, les deux autres approches précitées ne permettent pas d'exploiter la structure du réseau total de N capteurs. Les performances de ces techniques sont liées à celles d'un sous-réseau qui dépend du jeu de commutations envisagées.

Aucun des documents de l'art antérieur connu du Demandeur n'envisage la mise en oeuvre de techniques de goniométrie avec des systèmes de réception ayant plus de deux voies et où ce nombre de voies est inférieur au nombre de capteurs. De plus, l'état de l'art n'envisage pas d'algorithmes de goniométrie mono ou multi-sources sans a priori sur le signal et tout en exploitant les propriétés du réseau total de constitué de N capteurs comme si les signaux avaient été acquis par un système N voies.

Le document de Wei Wu et al, intitulé « Switched-Element Direction Finding », IEEE Transactions on Aerospace and Electronic Systems, IEEE Service Center, Piscataway, NJ, US, vol.45, n°3, XP011277363 décrit un procédé de goniométrie permettant d'approximer la matrice de covariance du réseau complet pour reconstituer la matrice de covariance et déterminer la direction d'arrivée des signaux.

L'invention concerne un procédé de goniométrie dans un système de réception ayant moins de voies de réception (P voies) que de capteurs du réseau (N capteurs). Le principe mis en oeuvre est d'acquérir alternativement au cours du temps les signaux reçus de plusieurs sous-réseaux composés de $P$ capteurs correspondant à P voies, afin d'acquérir sur une durée $T$ au moins une fois les signaux reçus sur chacun des N capteurs d'un réseau. Un sous réseau de $P$ capteurs est sélectionné avec un commutateur d'antennes. A partir de ces différentes acquisitions dites « commutations», les algorithmes de commutation devront reconstituer les éléments algébriques nécessaires pour appliquer des algorithmes de goniométrie comme si les signaux des $N$ capteurs du réseau avaient été acquis simultanément.

L'invention concerne un procédé de goniométrie de signaux émis par plusieurs émetteurs dans un système comprenant N capteurs et P voies de réception Ri, avec P inférieur à N, caractérisé en ce qu'il comporte au moins les étapes suivantes :

- sélectionner un premier sous-réseau de P capteurs, acquérir les signaux ou observations sur le premier sous-réseau à partir d'un premier instant $t_k$ sur une durée T,
- sélectionner un deuxième sous-réseau de P capteurs, acquérir les signaux ou observations sur le deuxième sous-réseau à partir d'un deuxième instant $t_k$ +T sur une même durée T, jusqu'à un $c^{ième}$ sous-réseau de P capteurs, acquérir les signaux ou observations sur le $c^{ième}$ sous-réseau à partir d'un $c^{ième}$ instant $t_k$ +(C-1)T sur une même durée T,
- déterminer à partir de la première observation et des observations suivantes acquises sur les C sous-réseaux, une première matrice de covariance des signaux $\mathbf{R}_{xx}^{1}(t_k)$ correspondant à la première observation et pour c tel que $2 \leq c \leq C$ les matrices de covariance $\mathbf{R}_{xx}^{c}(t_k+(c-1)T)$ correspondant à la $c^{ième}$ observation, déterminer pour $1 \leq c \leq C$ des espaces signaux $\mathbf{E}_{s}^{c}(t_k)$ de chacune des commutations à partir des matrices correspondantes $\mathbf{R}_{xx}^{c}(t_k+(c-1)T)$, en initialisant $\mathbf{E}_{s}^{old}(t_k) = \mathbf{E}_{s}^{1}(t_k)$ tel qu'à la $c^{ième}$ itération $\mathbf{E}_{s}^{old}(t_k)$ et $\mathbf{E}_{s}^{c}(t_k)$ ont chacune une sous matrice $\mathbf{E}_{s,\cup}^{c}$ et $\mathbf{E}_{s,\cup}^{c}$ correspondant chacune aux capteurs en commun et une sous matrice $\mathbf{E}_{s,\cap}^{old}$ et $\mathbf{E}_{s,\cap}^{c}$ correspondant chacune aux capteurs non en commun,
- à partir des sous parties des espaces signaux $\mathbf{E}_{s,\cup}^{c}$ et $\mathbf{E}_{s,\cup}^{c}$ estimées sur les capteurs en commun, déterminer la matrice de passage $\Omega = \left( \left( \mathbf{E}_{s,\cup}^{1} \right)^{H} \mathbf{E}_{s,\cup}^{1} \right)^{-1} \left( \mathbf{E}_{s,\cup}^{1} \right)^{H} \mathbf{E}_{s,\cup}^{2} = \left( \mathbf{T}_{k}^{1} \right)^{\#} \mathbf{T}_{k}^{2}$ entre les deux espaces signaux, reconstruire l'espace signal $\mathbf{E}_{s}^{1\cdots c}\left( t_k + \left( c-1 \right)T \right)$ correspondant au sous-réseau dont les signaux des capteurs acquis aux instants tk+(i-1)T pour $1 \leq i \leq c$, puis recalculer $\mathbf{E}_{s}^{old}(t_k)$ avec $\mathbf{E}_{s}^{old}\left( t_k \right) = \mathbf{E}_{s}^{1\cdots c}\left( t_k + \left( c-1 \right)T \right)$, à la $c^{ième}$ commutation
- appliquer un algorithme de goniométrie sur l'espace signal reconstruit $\mathbf{E}_{s}^{1\cdots C}\left( t_k + \left( C-1 \right)T \right)$.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un système comprenant plusieurs émetteurs indicés par m se propageant vers un réseau de capteurs suivant des trajets d'incidence Θmp indicés par p,
- La figure 2, l'incidence Θ=(θ, Δ) d'une source où θ est l'azimut et Δ l'élévation,
- La figure 3, la propagation en multi-trajets d'incidence Θmp (θmp, Δamp) ($p^{ième}$ trajet du $m^{ième}$ émetteur),
- La figure 4, un exemple d'un réseau de capteurs de position $(x_n, y_n)$ et $z_n$ =0 pour l'un des cas des figures 1 à 3,
- La figure 5, un exemple de commutateur P voies où $P \leq N$,
- La figure 6, un exemple de séquencement des Commutations,
- La figure 7, un exemple de synoptique d'acquisition au cours du temps des signaux d'un réseau de N capteurs avec un système de commutation avec trois voies de réception, et
- La figure 8, une base d'estimation d'une matrice à partir de capteurs communs utilisés.

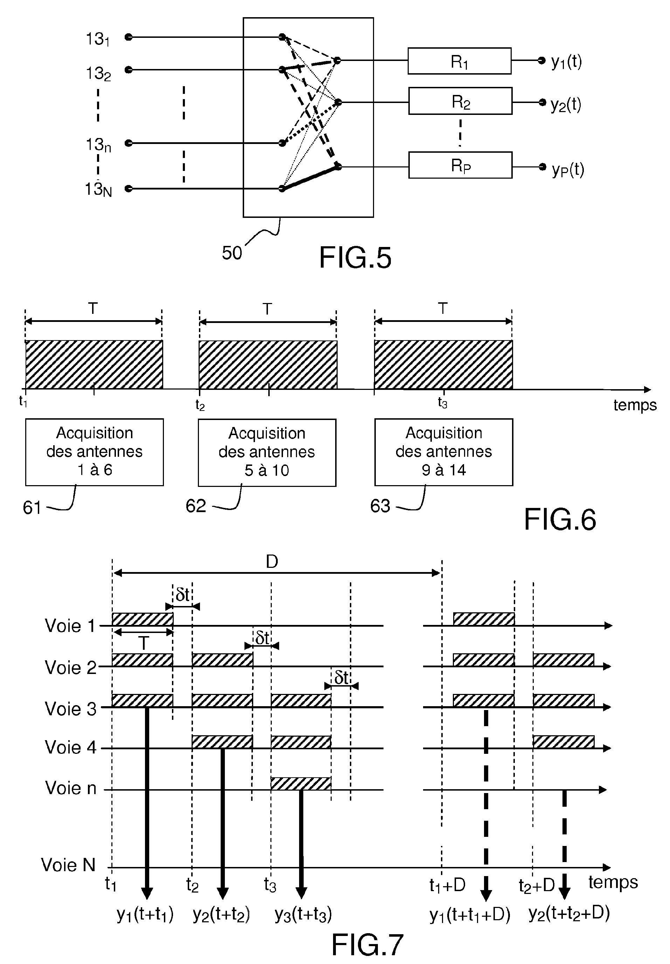

La figure 5 représente la liaison des capteurs d'un réseau tel que celui décrit à la figure 1 avec le système de réception par l'intermédiaire d'un commutateur présent dans le système de réception. Un sous-réseau de P capteurs 13i du réseau de N antennes est sélectionné avec le commutateur 50 d'antennes, c'est-à-dire que chaque capteur 13i va être relié aux P récepteurs $R_1$, $R_2$, ..., $R_P$, du système. Le procédé va acquérir alternativement au cours du temps les signaux reçus de plusieurs sous-réseaux de P voies au moins une fois sur tous les capteurs $13_1$, $13_N$, d'un réseau de N antennes.

A partir de ces différentes acquisitions dites « commutations», les algorithmes de commutation vont reconstituer les éléments algébriques nécessaires pour appliquer des algorithmes de goniométrie comme si les signaux des $N$ capteurs du réseau avaient été acquis simultanément.

Avant de détailler les exemples de mise en oeuvre du procédé selon l'invention, un rappel sur la modélisation du signal ainsi que sur les éléments algébriques que les algorithmes devront reconstruire est donné. Pour un canal à multi-trajets, en présence de $M$ émetteurs, le signal reçu en sortie du réseau antennaire, constitué de $N$ capteurs, s'écrit sous la forme suivante :

$$\mathbf{x}(t) = \begin{bmatrix} x_1(t) \\ \vdots \\ x_N(t) \end{bmatrix} = \sum_{m=1}^{M} \sum_{p=1}^{P_m} \rho_{mp} \mathbf{a}(\Theta_{mp}) s_m(t - \tau_{mp}) + \mathbf{n}(t) \tag{1}$$

où :

- $x_n(t)$ est le signal reçu sur le n$^{ième}$ capteur,
- $\mathbf{n}(t)$ est le bruit additif supposé blanc spatialement,
- $\mathbf{a}(\Theta)$ est la réponse du réseau à une incidence $\Theta$ de norme $N$.

Le m$^{ième}$ émetteur est caractérisé par :

- $s_m(t)$ le signal transmis par le m$^{ième}$ émetteur,
- $P_m$ le nombre de trajets paramétrés par :
- $\tau_{mp}$ et $\rho_{mp}$ qui sont respectivement le retard et l'atténuation du p$^{ième}$ trajet du m$^{ième}$ émetteur,
- $a(\Theta_{mp})$ le vecteur directeur de la source d'incidence $\Theta_{mp}$,

Le signal $\mathbf{x}(t)$ en sortie du réseau d'antennes peut aussi s'écrire de façon matricielle :

$$\mathbf{x}(t) = \mathbf{A}\mathbf{s}(t) + \mathbf{n}(t) \tag{2}$$

où $\mathbf{A}$ est la matrice des vecteurs directeurs $a(\Theta_{mp})$ et s(t) est le vecteur contenant l'ensemble des signaux des multi-trajets des émetteurs.

$$\mathbf{A} = \begin{bmatrix} \mathbf{a}(\Theta_{11}) & \mathbf{a}(\Theta_{MP_M}) \end{bmatrix} \text{ et } \mathbf{s}(t) = \begin{bmatrix} \rho_{11} s_1(t - \tau_{11}) \\ \vdots \\ \rho_{1P} s_1(t - \tau_{1P}) \\ \vdots \\ \rho_{M1} s_M(t - \tau_{M1}) \\ \vdots \\ \rho_{MP_M} s_M(t - \tau_{MP_M}) \end{bmatrix} \tag{3}$$

On dira que le même émetteur est en présence de signaux cohérents lorsque les retards des trajets $\tau_{mp}$ pour $1 \leq p \leq P_m$ sont quasiment identiques. Dans le contexte où le nombre de voies de réception est égal au nombre de capteurs du réseau, les algorithmes de goniométrie estiment la direction des trajets à partir de la matrice de covariance des observations x(t). En présence d'un bruit spatialement blanc, la matrice de covariance s'écrit selon l'équation (2) de la manière suivante :

$$\mathbf{R}_{xx} = \left\langle E\left[\mathbf{x}(t)\mathbf{x}(t)^H\right] \right\rangle = \mathbf{A}\mathbf{R}_{ss}\mathbf{A}^H + \sigma^2 \mathbf{I}_N \tag{4}$$

où $E[.]$ est l'espérance mathématique, $\langle . \rangle$ est la moyenne temporelle sur l'instant «$t$», $\mathbf{R}_{ss}$ est la matrice de covariance du vecteur signal $\mathbf{s}(t)$, $\sigma^2$ est le niveau du bruit et $\mathbf{I}_N$ est la matrice identité de dimension $N$ x $N$. On notera aussi :

$$\mathbf{R}_{yy} = \mathbf{A}\left(\mathbf{R}_{ss}\right)\mathbf{A}^H \tag{5}$$

la matrice de covariance des observations non bruitées. On notera par $R$ le rang de la matrice $\mathbf{R}_{yy}$ qui vérifie :

$$R = \min\left\{ rang\left(\mathbf{A}\right), rang\left(\mathbf{R}_{ss}\right)\right\} \leq \min\left\{P, N\right\} \quad \text{avec } P_0 = \sum_{m=1}^{M} P_m \tag{6}$$

$R$ peut être inférieur au nombre $P_0$ total de trajets. On peut ainsi montrer que la décomposition en éléments propres de $\mathbf{R}_{xx}$ s'écrit :

$$\mathbf{R}_{xx} = \mathbf{E}_s \left(\mathbf{\Lambda}_s + \sigma^2 \mathbf{I}_R\right)\left(\mathbf{E}_s\right)^H + \sigma^2 \mathbf{E}_b \left(\mathbf{E}_b\right)^H \tag{7}$$

La décomposition en éléments propres de $\mathbf{R}_{yy}$ s'écrit quant à elle :

$$\mathbf{R}_{yy} = \mathbf{E}_s \left(\mathbf{\Lambda}_s\right)\left(\mathbf{E}_s\right)^H \tag{8}$$

La matrice diagonale $\Lambda_s$ contient les valeurs propres non nulles de $\mathbf{R}_{yy}$ et les matrices $\mathbf{E}_s$ et $\mathbf{E}_b$ contiennent les vecteurs propres de $\mathbf{R}_{xx}$ et $\mathbf{R}_{yy}$. La matrice $\mathbf{E}_s$, contenant les vecteurs propres associés aux valeurs propres du signal, est nommée Espace signal. La matrice $\mathbf{E}_b$, contenant les vecteurs propres associés aux valeurs propres $\sigma^2$ de bruit, est appelée Espace bruit.

De plus, d'après les équations (5) et (6), une des racines carrée de la matrice $\mathbf{R}_{yy}$ peut s'écrire de la manière suivante :

$$\mathbf{R}_{yy}^{1/2} = \mathbf{E}_s \left(\mathbf{\Lambda}_s\right)^{1/2} = \mathbf{A}\left(\mathbf{R}_{ss}\right)^{1/2} \mathbf{U}^H \tag{9}$$

où u est une matrice unitaire de dimension $R \times R$ sachant que $R$ est le rang de $\mathbf{R}_{yy}$. On en déduit l'écriture suivante de l'espace signal :

$$\mathbf{E}_s = \mathbf{A}\mathbf{T} \quad \text{où} \quad \mathbf{T} = \left(\mathbf{R}_s\right)^{1/2} \mathbf{U}^H \left(\mathbf{\Lambda}_s\right)^{-1/2} \tag{10}$$

où $\mathbf{T}$ est une matrice de passage de dimension $P_0 \times R$ qui relie l'espace signal à la matrice $\mathbf{A}$ des vecteurs directeurs des trajets et où $P_0$ est le nombre total de trajets.

La description va maintenant formuler le problème. Les méthodes de goniométrie à sous-espace telle que MUSIC utilisent l'espace signal $\mathbf{E}_s$ ou l'espace bruit $\mathbf{E}_b$. Les méthodes super-résolutives telles que la formation de voies utilisent, quant à elles, la matrice de covariance $\mathbf{R}_{xx}$ des signaux reçus. L'objectif des algorithmes de commutation selon l'invention est alors de reconstituer l'espace signal $\mathbf{E}_s$ nécessaire pour les méthodes à sous-espaces et/ou de reconstituer la matrice de covariance $\mathbf{R}_{xx}$ qui est incomplète selon le séquencement des acquisitions de la figure 6.

La figure 6 montre que, dans un système de réception commuté, les signaux d'une partie des capteurs du réseau sont acquis entre les instants $t_i$ et $t_i + T$. Dans l'exemple de la figure 6, les signaux des capteurs 1 à 6 sont acquis entre $t_1$ et $t_1 + T$, 61, et ceux des capteurs 5 à 10 entre $t_2$ et $t_2 + T$, 62.

Comme les tranches temporelles ou intervalles temporels $(t_1)$-$(t_1+T)$, $(t_2)$-$(t_2+T)$ sur lesquelles on va acquérir les signaux des différentes commutations sont disjointes, le calcul de la matrice de covariance des $N>P$ capteurs du réseau n'est pas direct. L'idée est de reconstruire soit les matrices espace signal $\mathbf{E}_s$ soit les matrices espace bruit $\mathbf{E}_b$ du réseau total par des techniques algébriques à partir des espaces signaux et des espaces bruit des sous-réseaux de chacune des commutations. On peut aussi envisager, après la reconstruction de $\mathbf{E}_s$ et $\mathbf{E}_b$, de reconstruire la matrice de covariance $\mathbf{R}_{xx}$ du réseau complet.

Les algorithmes de commutations supposent tout d'abord une stabilité des paramètres du canal. Plus précisément pour chacune des tranches temporelles de durée T, on suppose que :

- les paramètres du canal tels que les angles d'incidences et les amplitudes des trajets n'ont pas trop variés entre les commutations de durée $T$,
- la moyenne temporelle sur la durée $T$ de la commutation de la puissance des trajets n'a pas trop varié entre les commutations.

La reconstitution sur les $N$ capteurs des composantes algébriques demande que le rang du nombre d'antennes en commun entre chacune des commutations soit au moins égal au nombre de groupes de trajets cohérents. Ce rang est estimé par une technique de dénombrement, connue de l'homme du métier, sur les valeurs propres de la matrice de covariance obtenue à chaque commutation. Ce nombre de groupes de trajets cohérents correspond au rang de la matrice de covariance des signaux reçus sans bruit et à la dimension de l'espace signal que l'on souhaite reconstruire. En effet, les algorithmes de commutations vont recaler en phase et amplitude les espaces signaux des commutations successives. L'apprentissage de cette correction se fera uniquement à partir des antennes en commun entre deux commutations successives. Pour que cela soit possible, il faut que la dimension de l'espace signal du réseau constitué par les antennes en commun entre deux commutations ne dépasse pas le nombre d'antennes en commun pour qu'il soit la même que celui du réseau à N antennes.

Le principe de l'Algorithme de Commutation est représenté à la figure 7. Selon la figure 7, le système acquière à l'instant $t_k$ le signal $y_c(t)$ du $c^{\text{ième}}$ sous-réseau dont les capteurs sont indicés par l'ensemble d'indices $\Psi_c = \{i_1, i_2, \cdots i_P\}$. La durée d'enregistrement de ces signaux est $T$. On note par $\mathbf{y}_c(t)$ le vecteur observation où :

$$\mathbf{y}_c(t) = \begin{bmatrix} x_{i_1}(t) \\ \vdots \\ x_{i_P}(t) \end{bmatrix} \text{ pour } t_k \leq t \leq T + t_k \qquad (11)$$

Le vecteur $\mathbf{y}_c(t)$ s'écrit selon (1) et (2) de la manière suivante :

$$\mathbf{y}_c(t) = \mathbf{A}_c \mathbf{s}(t) + \mathbf{n}_c(t) \quad \text{où } \mathbf{A}_c = \mathbf{A}(\Psi_c, :) \qquad (12)$$

où $\mathbf{A}_c = \mathbf{A}(\Psi_c, :)$ est une notation de type MATLAB connue de l'homme du métier, correspondant à la $\Psi_c^{\text{ième}}$ colonne de $\mathbf{A}$. Les colonnes de $\mathbf{A}_c$ sont les vecteurs directeurs de chacune des sources incidentes sur le $c^{\text{ième}}$ sous-réseau.

Un certain nombre de capteurs en commun sont observés, les signaux qu'ils reçoivent acquis, entre la $c^{\text{ième}}$ commutation et la $(c+1)^{\text{ième}}$ commutation. Ce nombre de capteurs en commun doit être égal au rang maximal supposé de la matrice de covariance $\mathbf{R}_{xx}$ que l'on cherche à reconstituer. Afin d'acquérir au moins une fois les signaux reçus par tous les capteurs du réseau, il faut effectuer au minimum C commutations, où C est le nombre de capteurs du réseau. C'est-à-dire qu'il faut acquérir les signaux $y_c(t_k + (c-1)T + t)$ pour $1 \leq c \leq C$ et $0 \leq t \leq T$ où C est le nombre de commutations pour reconstruire l'espace signal (où la matrice de covariance) et T est toujours la durée d'acquisition du signal sur une commutation. Afin de mieux faire comprendre le procédé selon l'invention, l'algorithme de commutation sera explicité dans un premier temps à partir de deux commutations successives. Dans un second temps, la description sera généralisée à $C > 2$ commutations.

Le procédé concerne dans un premier temps un algorithme de commutation avec C=2 commutations.

Dans ces conditions, les observations de deux commutations successives s'écrivent :

$$\begin{cases} \mathbf{y}_1(t + t_k) = \mathbf{A}_1 \mathbf{s}(t + t_k) + \mathbf{n}_1(t + t_k) \\ \mathbf{y}_2(t + t_k + T) = \mathbf{A}_2 \mathbf{s}(t + t_k + T) + \mathbf{n}_2(t + t_k + T) \end{cases} \text{ pour } 0 \leq t \leq T \qquad (13)$$

Pour que l'algorithme de commutation puisse fonctionner, il faut que $\mathbf{A}_1 = \mathbf{A}(\Psi_1, :)$ et $\mathbf{A}_2 = \mathbf{A}(\Psi_2, :)$. Cette hypothèse indique que les paramètres tels que les angles d'arrivée et la polarisation des trajets sont les mêmes $(t_k \cdots t_k + T)$ pour les plages temporelles et $(t_k + T \cdots t_k + 2T)$ des deux commutations respectives. Les paramètres des trajets doivent donc être stationnaires sur la durée des deux commutations allant de $t_k$ à $t_k + 2T$.

Le procédé suppose de plus que les matrices de covariance moyennées des sources sont de la même façon stationnaire en vérifiant que:

$$\mathbf{R}_{ss}(t_k) = \mathbf{R}_{ss}(t_k + T) \text{ sachant que } \mathbf{R}_{ss}(t_k) = \frac{1}{T} \int_0^T E\left[\mathbf{s}(t + t_k)\mathbf{s}(t + t_k)^H\right] dt \qquad (14)$$

Sachant que $T$ correspond souvent à quelque dizaines de symboles, les matrices $\mathbf{R}_{ss}(t_k)$ et $\mathbf{R}_{ss}(t_k + T)$ sont alors peu différentes de la matrice de covariance des sources $\mathbf{R}_{ss} = \langle E[\mathbf{s}(t)\mathbf{s}(t)^H] \rangle$ lorsque l'hypothèse de stationnarité des paramètres est vérifiée avec $\mathbf{A}_1 = \mathbf{A}(\Psi_1, :)$ et $\mathbf{A}_2 = \mathbf{A}(\Psi_2, :)$. La notation $\langle . \rangle$ correspond à la moyenne temporelle.

Lorsque les deux hypothèses précédentes sont vérifiées, les matrices de covariance de $\mathbf{y}_1(t + t_k)$ et $\mathbf{y}_2(t + t_k + T)$ s'écrivent :

$$\begin{cases} \mathbf{R}_{xx}{}^1\left(t_k\right) = \mathbf{A}_1\mathbf{R}_{ss}\left(t_k\right)\left(\mathbf{A}_1\right)^H + \sigma^2\mathbf{I}_P \\ \mathbf{R}_{xx}{}^2\left(t_k+T\right) \approx \mathbf{A}_2\mathbf{R}_{ss}\left(t_k\right)\left(\mathbf{A}_2\right)^H + \sigma^2\mathbf{I}_P \end{cases} \text{sachant que} \begin{cases} \mathbf{R}_{xx}{}^c\left(t_k\right) = \dfrac{1}{T}\int_0^T E\left[\mathbf{y}_c\left(t+t_k\right)\mathbf{y}_c\left(t+t_k\right)^H\right]dt \\ \mathbf{R}_{ss}\left(t_k+T\right) \approx \mathbf{R}_{ss}\left(t_k\right) \end{cases} \tag{15}$$

où $\mathbf{R}_{xx}{}^c\left(t_k+(c-1)T\right)$, $\mathbf{R}_{ss}\left(t_k\right) \approx \mathbf{R}_{ss}\left(t_k+(c-1)T\right)$, représente la matrice de covariance des signaux de la $c^{\text{ième}}$ commutation. Cela représente plus particulièrement la matrice de covariance du $c^{\text{ième}}$ sous-réseau intégré entre les instants $t_k+(c-1)T$ à $t_k+cT$. En pratique les matrices sont estimées de la manière suivante :

$$\hat{\mathbf{R}}_{xx}{}^c\left(t_k\right) = \frac{1}{T}\sum_{t=1}^{T}\mathbf{y}_c\left(t+t_k\right)\mathbf{y}_c\left(t+t_k\right)^H \tag{16}$$

L'objectif de l'algorithme de commutation est de reconstituer l'espace signal ainsi que la matrice de covariance d'une observation virtuelle d'un sous réseau contenant les capteurs indicés par les ensembles $\Psi_1$ et $\Psi_2$.

Pour généraliser à plusieurs commutations, on suppose que pour les commutations indicées par $i \leq c \leq C$ :

- les paramètres de type angle d'arrivée varient peu avec $\mathbf{A}_c = \mathbf{A}(\Psi_c,:)$,
- les matrices de covariance des trajets varient peu $\mathbf{R}_{ss}(t_k) \approx \mathbf{R}_{ss}(t_k+(c-1)T)$,
- le nombre de capteurs communs à deux commutations successives doit au moins être égal au rang des matrices $\mathbf{R}_{xx}{}^c(t_k+(c-1)T)$.

Ces hypothèses permettent d'écrire les matrices de covariance $\mathbf{R}_{xx}{}^c(t_k+(c-1)T)$ selon l'équation (15) en les faisant dépendre uniquement de $\mathbf{R}_{ss}(t_k)$ et $\mathbf{A}_c$. Lorsque $C=2$, les ensembles d'indices $\Psi_1$ et $\Psi_2$ sont tels que les matrices $\mathbf{A}_1$ et $\mathbf{A}_2$ s'écrivent :

$$\mathbf{A}_1 = \begin{bmatrix} \mathbf{B}_1 \\ \mathbf{B}_2 \end{bmatrix} \text{ et } \mathbf{A}_2 = \begin{bmatrix} \mathbf{B}_2 \\ \mathbf{B}_3 \end{bmatrix} \tag{17}$$

où la matrice $\mathbf{B}_2$ des vecteurs directeurs des trajets est associée au sous-réseau commun aux deux commutations, la matrice $\mathbf{B}_1$ et la matrice $\mathbf{B}_3$ contiennent les vecteurs directeurs des trajets qui ne sont pas sous-réseau de capteurs. Plus précisément, la matrice $\mathbf{B}_2$ correspond au sous-réseau dont les indices des antennes appartiennent à l'ensemble $\Psi_1 \cap \Psi_2$. Comme il a été dit précédemment, on suppose que le nombre d'éléments de $\Psi_1 \cap \Psi_2$ est au plus égal au rang des matrices $\mathbf{R}_{xx}{}^1(t_k)$ et $\mathbf{R}_{xx}{}^2(t_k+T)$. L'objectif est d'obtenir l'espace signal et la matrice de covariance associés à une observation virtuelle dont l'ensemble des indices des capteurs du sous-réseau est défini par $\Psi_1 \cup \Psi_2$, soit :

$$\mathbf{R}_{xx}{}^{12}\left(t_k\right) = \mathbf{A}_{12}\mathbf{R}_{ss}\left(t_k\right)\left(\mathbf{A}_{12}\right)^H + \sigma^2\mathbf{I}_{N_{12}} \quad \text{où} \quad \mathbf{A}_{12} = \begin{bmatrix} \mathbf{B}_1 \\ \mathbf{B}_2 \\ \mathbf{B}_3 \end{bmatrix} \tag{18}$$

et $N_{12}$ est le cardinal de l'ensemble $\Psi_1 \cup \Psi_2$. En supposant que l'équation (15) soit vérifiée, l'espace signal $\mathbf{E}_s$ associé à la matrice de covariance $\mathbf{R}_{xx}{}^c(t_k+(c-1)T)$ s'écrit d'après (10) de la manière suivante :

$$\mathbf{E}_s{}^c\left(t_k\right) = \mathbf{A}_c\mathbf{T}_k{}^c \quad \text{où} \quad \mathbf{T}_k{}^c = \left(\mathbf{R}_{ss}\left(t_k\right)\right)^{1/2}\left(\mathbf{U}_k{}^c\right)^H\left(\mathbf{\Lambda}_{s,k}{}^c\right)^{-1/2} \tag{19}$$

où $\mathbf{U}_k{}^c$ est une matrice unitaire inconnue de dimension $R \times R$, et où $\mathbf{A}_{s,k}{}^c$ est une matrice diagonale contenant les valeurs propres de signal de $\mathbf{R}_{xx}{}^c(t_k+(c-1)T)$. L'expression (19) montre que les matrices de mélange $\mathbf{T}_k{}^1$ et $\mathbf{T}_k{}^2$ obtenues pour deux instants consécutifs $t_k$, $t_k+T$ sont différentes. L'espace signal du signal virtuel reconstitué sera soit celui de l'instant $t_k$ avec $\mathbf{E}_s{}^{12}\left(t_k\right) = \mathbf{A}_{12}\mathbf{T}_k{}^1$ soit celui de l'instant $t_k+T$ avec $\mathbf{E}_s{}^{12}\left(t_k+T\right) = \mathbf{A}_{12}\mathbf{T}_k{}^2$ matrice reconstruite sur les deux commutations.

Pour reconstituer l'espace signal complet sur les deux commutations $C_1$, $C_2$, $\mathbf{E}_s{}^{12}\left(t_k\right)$ ou $\mathbf{E}_s{}^{12}\left(t_k+T\right)$, on utilisera l'espace

signal $\mathbf{E}_s^1(t_k)$ et l'espace signal $\mathbf{E}_s^2\left(t_k+T\right)$ qui se décomposent de la manière suivante selon (17) :

$$\mathbf{E}_s^1\left(t_k\right)=\begin{bmatrix}\mathbf{E}_{s,\cap}^1\\ \mathbf{E}_{s,\cup}^1\end{bmatrix}=\begin{bmatrix}\mathbf{B}_1\mathbf{T}_k^{\,1}\\ \mathbf{B}_2\mathbf{T}_k^{\,1}\end{bmatrix}\;\;\text{et}\;\;\mathbf{E}_s^2\left(t_k+T\right)=\begin{bmatrix}\mathbf{E}_{s,\cup}^2\\ \mathbf{E}_{s,\cap}^2\end{bmatrix}=\begin{bmatrix}\mathbf{B}_2\mathbf{T}_k^{\,2}\\ \mathbf{B}_3\mathbf{T}_k^{\,2}\end{bmatrix} \tag{20}$$

où :

- $\mathbf{E}_{s,\cup}^1$ et $\mathbf{E}_{s,\cup}^2$ sont respectivement les sous-parties des espaces signaux $\mathbf{E}_s^1$ et $\mathbf{E}_s^2$ estimés uniquement sur les capteurs en commun aux espaces signaux $\mathbf{E}_s^1$ et $\mathbf{E}_s^2$ .

- $\mathbf{E}_{s,\cap}^1$ et $\mathbf{E}_{s,\cap}^2$ sont respectivement les sous-parties des espaces signaux $\mathbf{E}_s^1$ et $\mathbf{E}_s^2$ estimés uniquement sur les capteurs qui ne sont pas en commun aux espaces signaux $\mathbf{E}_s^1$ et $\mathbf{E}_s^2$ .

Remarquant que $\mathbf{E}_{s,\cup}^1=\mathbf{B}_2\mathbf{T}_k^{\,1}$ et que $\mathbf{E}_{s,\cup}^2=\mathbf{B}_2\mathbf{T}_k^{\,2}$ on en déduit que la matrice de passage $\Omega$ entre $\mathbf{E}_{s,\cup}^1$ et $\mathbf{E}_{s,\cup}^2$ s'écrit :

$$\Omega=\left(\left(\mathbf{E}_{s,\cup}^1\right)^H\mathbf{E}_{s,\cup}^1\right)^{-1}\left(\mathbf{E}_{s,\cup}^1\right)^H\mathbf{E}_{s,\cup}^2=\left(\mathbf{T}_k^{\,1}\right)^{\#}\mathbf{T}_k^{\,2} \tag{21}$$

où # désigne la pseudo-inverse d'une matrice. Il faut noter que le calcul de (21) est possible uniquement lorsque les matrices $\mathbf{T}_k^1$ et $\mathbf{T}_k^2$ ont un rang égal au nombre de sources. Comme ce rang est limité par le nombre de lignes de $\mathbf{E}_{s,\cup}^1$ et de $\mathbf{E}_{s,\cup}^2$ qui correspond au nombre de capteurs en commun, on en déduit que la dimension des espaces signaux $\mathbf{E}_s^1(t_k)$ et $\mathbf{E}_s^2(t_k+T)$ ne peut pas dépasser le nombre de capteurs en commun aux deux commutations. Plus généralement on ne peut pas reconstituer un espace signal de dimension plus grande que le nombre de capteurs en communs. La matrice calculée à l'équation (21) permet de calculer (ou rephaser) les parties manquantes des espaces signaux que l'on cherche à reconstituer, soit :

$$\mathbf{B}_3\mathbf{T}_k^{\,1}=\mathbf{E}_{s,\cap}^2\Omega^{-1}\;\;\text{et}\;\;\mathbf{B}_1\mathbf{T}_k^{\,2}=\mathbf{E}_{s,\cap}^1\Omega \tag{22}$$

On en déduit que les espaces signaux reconstitués vérifient :

$$\mathbf{E}_s^{12}\left(t_k\right)=\mathbf{A}_{12}\mathbf{T}_k^{\,1}=\begin{bmatrix}\mathbf{E}_{s,\cap}^1\\ \mathbf{E}_{s,\cup}^1\\ \mathbf{E}_{s,\cap}^2\Omega^{-1}\end{bmatrix}\;\;\text{et}\;\;\mathbf{E}_s^{12}\left(t_k+T\right)=\mathbf{A}_{12}\mathbf{T}_k^{\,2}=\begin{bmatrix}\mathbf{E}_{s,\cap}^1\Omega\\ \mathbf{E}_{s,\cup}^2\\ \mathbf{E}_{s,\cap}^2\end{bmatrix} \tag{23}$$

L'espace signal a été reconstitué à partir de deux commutations. On sait que la reconstitution est valide lorsque les mêmes sources incidentes sont présentes sur les deux commutations. Si au moins une des sources n'est pas présente sur la seconde commutation ou alors qu'une source supplémentaire apparait sur la seconde commutation alors l'espace signal reconstitué ne sera pas valable. Pour le savoir il faut établir un processus de validation qui sera basé sur la structure algébrique de la matrice de covariance. En effet lorsque les mêmes sources sont présentes sur les deux commutations, la matrice de covariance reconstituée a la structure propre suivante :

$$\mathbf{R}_{xx}^{\,12}\left(t_k\right)-\sigma^2\mathbf{I}_{N_{12}}=\tilde{\mathbf{E}}_s^{12}\left(t_k\right)\Lambda_s\tilde{\mathbf{E}}_s^{12}\left(t_k\right)^H$$

où $\tilde{\mathbf{E}}_s^{12}\left(t_k\right)$ est la base des vecteurs propres qui est la version orthonormalisée la matrice reconstitué $\mathbf{E}_s^{12}\left(t_k\right)$ et $\Lambda_s$ est la matrice diagonale des valeurs propres de signal de la matrice de covariance reconstitué. En décomposant la

matrice $\tilde{\mathbf{E}}_s^{12}\left(t_k\right)$ de la manière suivante :

$$\tilde{\mathbf{E}}_1 = \begin{bmatrix} \mathbf{B}_1 \\ \mathbf{B}_2 \end{bmatrix} \tilde{\mathbf{T}} \text{ et } \tilde{\mathbf{E}}_2 = \begin{bmatrix} \mathbf{B}_2 \\ \mathbf{B}_3 \end{bmatrix} \text{ sachant que } \tilde{\mathbf{E}}_s^{12}\left(t_k\right) = \begin{bmatrix} \mathbf{B}_1 \\ \mathbf{B}_2 \\ \mathbf{B}_3 \end{bmatrix} \tilde{\mathbf{T}} \qquad (24)$$

dans le cas idéal on sait que

$$\mathbf{R}_{xx}^{12}\left(t_k\right) - \sigma^2 \mathbf{I}_{N_{12}} = \tilde{\mathbf{E}}_s^{12}\left(t_k\right) \Lambda_s \tilde{\mathbf{E}}_s^{12}\left(t_k\right)^H = \begin{bmatrix} \mathbf{R}_{xx}^1\left(t_k\right) - \sigma^2 \mathbf{I}_P & \\ & \mathbf{R}_{xx}^2\left(t_k+T\right)^2 - \sigma^2 \mathbf{I}_P \end{bmatrix} = \begin{bmatrix} \tilde{\mathbf{E}}_1 \Lambda_s \tilde{\mathbf{E}}_1^H & \\ & \tilde{\mathbf{E}}_2 \Lambda_s \tilde{\mathbf{E}}_2^H \end{bmatrix}$$

,

où $\sigma^2$ est le niveau du bruit. On déduit que dans le cas idéal que $\mathbf{R}_{xx}^c(t_k +(c\text{-}1)T) = \tilde{\mathbf{E}}_c \Lambda_s \tilde{\mathbf{E}}_c^H$ et donc que :

$$\Lambda_s = \Lambda_i \text{ pour } 1 \le i \le 2 \text{ sachant que } \Lambda_i = \left(\tilde{\mathbf{E}}_c\right)^{\#} \mathbf{R}_{xx}^c\left(t_k + \left(c-1\right)T\right) \left(\tilde{\mathbf{E}}_c^H\right)^{\#}$$

où $\mathbf{E}^{\#}$ est la pseudo-inverse de $\mathbf{E}$. Un critère de validité possible de la reconstitution de l'espace signal peut être

$$\text{Si } \frac{\sigma_{\Lambda_s}}{\overline{\lambda}_s} > \eta \text{ alors la commutation est } OK \text{ sachant que } \begin{cases} \Lambda_i = \left(\tilde{\mathbf{E}}_c\right)^{\#} \mathbf{R}_{xx}^c\left(t_k + \left(c-1\right)T\right) \left(\tilde{\mathbf{E}}_c^H\right)^{\#} \\[2mm] \overline{\lambda}_s = \dfrac{\sum\limits_c^C trace(\Lambda_c)}{R \times C} \\[2mm] \sigma_{\Lambda_s} = \sqrt{\dfrac{\sum\limits_i^C trace\left(\left(\Lambda_i - \overline{\Lambda}_s\right)^2\right)}{R \times C}} \end{cases} \qquad (25)$$

où R est la dimension de l'espace signal et $\eta$ est un seuil devant être fixé par rapport au produit BT, au rang R de l'espace signal et au nombre de commutations C. On peut prendre par exemple $\eta = 3/\sqrt{R \times C \times BT}$

$$J = \frac{trace\left(\Pi_{12}\left(t_k\right)\Pi_{12}\left(t_k+T\right)\right)}{trace\left(\Pi_{12}\left(t_k\right)\right)} \text{ où } \Pi_{12}\left(t_k\right) = \mathbf{E}_s^{12}\left(t_k\right)\mathbf{E}_s^{12}\left(t_k\right)^{\#} \overline{\overline{7}} \mathbf{E}_s^{12}\left(t_k+T\right) = \mathbf{A}_{12}\mathbf{T}_k^2 = \begin{bmatrix} \mathbf{E}_{s,\cap}^1\Omega \\ \mathbf{E}_{s,\cup}^2 \\ \mathbf{E}_{s,\cap}^2 \end{bmatrix}$$

Les étapes de reconstitution de l'espace signal pour C=2 commutations sont donc décrites dans le tableau 1 :

Etapes A de Reconstitution de l'espace signal avec C=2 Commutations

| |
|---|
| **Etape 1.A :** Calcul de la moyenne temporelle $\mathbf{R}_{xx}^{c=1}(t_k)$ selon l'expression (15) sur une durée *T de* l'observation $\mathbf{y}_1(t+t_k)$. Décomposition en éléments propres de $\mathbf{R}_{xx}^{c=1}(t_k)$ pour calculer l'espace signal $\mathbf{E}_s^1(t_k)$, on récupère l'espace signal sur la première commutation,<br><br>**Etape 2.A :** Calcul de la moyenne temporelle $\mathbf{R}_{xx}^{c=2}(t_k + T)$ selon l'expression (15) sur une durée *T* de l'observation $\mathbf{y}_2(t+t_k+T)$. Décomposition en éléments propres de $\mathbf{R}_{xx}^{c=2}(t_k + T)$ pour calculer l'espace signal $\mathbf{E}_s^2(t_k+T)$,<br><br>**Etape 3.A :** Extraction des sous matrices $\mathbf{E}_{s,\cap}^1$ , $\mathbf{E}_{s,\cup}^1$ , $\mathbf{E}_{s,\cup}^2$ et $\mathbf{E}_{s,\cap}^2$ sachant que |

(suite)

• Espace signal de $\mathbf{R}_{xx}^{c=1}(t_k) : \mathbf{E}_s^1(t_k) = \begin{bmatrix} \mathbf{E}_{s,\cap}^1 \\ \mathbf{E}_{s,\cup}^1 \end{bmatrix}$

• Espace signal de $\mathbf{R}_{xx}^{c=2}(t_k+T) : \mathbf{E}_s^2(t_k+T) = \begin{bmatrix} \mathbf{E}_{s,\cup}^2 \\ \mathbf{E}_{s,\cap}^2 \end{bmatrix}$

**Etape 4.A :** Calcul de la matrice de passage $\Omega$ tel que $\mathbf{T}_2 = \mathbf{T}_1\Omega$

• $\Omega = \left( \left( \mathbf{E}_{s,\cup}^1 \right)^H \mathbf{E}_{s,\cup}^1 \right)^{-1} \left( \mathbf{E}_{s,\cup}^1 \right)^H \mathbf{E}_{s,\cup}^2 = \left( \mathbf{T}_k^1 \right)^{\#} \mathbf{T}_k^2$

**Etape 5.A :** Reconstruction des espaces signaux aux instants $t_k$ et $t_k+T$

• $\mathbf{E}_s^{12}(t_k) = \mathbf{A}_{12}\mathbf{T}_k^1 = \begin{bmatrix} \mathbf{E}_{s,\cap}^1 \\ \mathbf{E}_{s,\cup}^1 \\ \mathbf{E}_{s,\cap}^2\Omega^{-1} \end{bmatrix}$ et $\mathbf{E}_s^{12}(t_k+T) = \mathbf{A}_{12}\mathbf{T}_k^2 = \begin{bmatrix} \mathbf{E}_{s,\cap}^1\Omega \\ \mathbf{E}_{s,\cup}^2 \\ \mathbf{E}_{s,\cap}^2 \end{bmatrix}$

L'étape suivante est une étape de vérification de la validité de la commutation

**Etape 6.A :** Orthonormalisation de la matrice $\mathbf{E}_s^{12}(t_k)$ pour obtenir $\tilde{\mathbf{E}}_s^{12}(t_k)$. Extraction des matrices $\mathbf{E}_c$ de la matrice $\tilde{\mathbf{E}}_s^{12}(t_k)$ selon (24)

**Etape 7.A :** Test de Validité de la commutation selon les équations (25) : Si selon le test la reconstitution de l'espace signal est OK alors Commut_OK=1 sinon Commut_OK=0.

Un algorithme de goniométrie sera envisageable uniquement lorsque Commut_OK=1. On détectera une anomalie lorsque Commut_OK=0 qui indique que l'une des hypothèses décrites précédemment n'est pas vérifiée.

En présence de C=2 commutations, lorsque la stationnarité des paramètres est vérifiée sur une durée de $2LT$, avec L le nombre de moyennes possibles dans le temps qui correspond à une valeur entière, les matrices de covariance des observations non bruitées $\mathbf{R}_{xx}^1(t_k)$ et $\mathbf{R}_{xx}^2(t_k+T)$ des étapes 1.A et 2.A peuvent être remplacées par les matrices $\mathbf{C}_{xx}^1(t_k)$ et $\mathbf{C}_{xx}^2(t_k+T)$ suivantes

$$\mathbf{C}_{xx}^1(t_k) = \sum_{i=1}^{L} \mathbf{R}_{xx}^1\left(t_k + 2(i-1)T\right) \quad \text{et} \quad \mathbf{C}_{xx}^2(t_k+T) = \sum_{i=1}^{L} \mathbf{R}_{xx}^2\left(t_k + 2iT\right) \qquad (26)$$

L'étape optionnelle de l'équation (26) a pour avantage d'augmenter le temps d'intégration des matrices de covariances des sous-réseaux ce qui a pour conséquence d'améliorer la précision de la goniométrie.

Lorsque la reconstitution de l'espace signal est correcte avec J>η, on peut envisager de reconstituer la matrice de covariance des observations bruitées sur les deux commutations $\mathbf{R}_{xx}^{12}(t_k)$. On a deux commutations et on va réintégrer sur les mêmes voies. La matrice de covariance est calculée grâce aux échantillons acquis aux instants 1 et 3. Les étapes sont décrites dans le tableau 2 :

Etapes B de Reconstitution de la matrice de covariance avec C=2 Commutations:

**Etape 1.B** : Calcul du niveau de bruit $\sigma^2$ en moyennant les valeurs propres de bruit des matrices $\mathbf{R}^1 = \mathbf{R}_{xx}^1(t_k)$ (où $\mathbf{R}^1 = \mathbf{C}_{xx}^1(t_k)$ selon (26) et $\mathbf{R}^2 = \mathbf{R}_{xx}^2(t_k+T)$ (où $\mathbf{R}^2 = \mathbf{C}_{xx}^2(t_k+T)$ selon (26) qui sont de dimension $PxP$,

**Etape 2.B** : Ortho-normalisation des colonnes de la matrice espace signal à l'instant $t_k$ pour les deux commutations $\mathbf{E}_s^{12}(t_k)$ qui ne sont pas orthonormées a priori. On obtient ainsi la matrice $\tilde{\mathbf{E}}_s^{12}(t_k)$,

**Etape 3.B** : Décomposition de la matrice $\tilde{\mathbf{E}}_s^{12}(t_k)$ en deux parties telle que :

(suite)

$$\tilde{\mathbf{E}}_s^{12}(t_k) = \begin{bmatrix} \mathbf{B}_1 \\ \mathbf{B}_2 \\ \mathbf{B}_3 \end{bmatrix} \tilde{\mathbf{T}} \quad \text{sachant que} \begin{cases} \mathbf{R}^c = \tilde{\mathbf{E}}_c \Lambda_s \left(\tilde{\mathbf{E}}_c\right)^H \quad \text{pour } 1 \le c \le 2 \\[2mm] \tilde{\mathbf{E}}_1 = \begin{bmatrix} \mathbf{B}_1 \\ \mathbf{B}_2 \end{bmatrix} \tilde{\mathbf{T}} \text{ et } \tilde{\mathbf{E}}_2 = \begin{bmatrix} \mathbf{B}_2 \\ \mathbf{B}_3 \end{bmatrix} \end{cases} \tag{27}$$

**Etape 4.B** : Calcul de la matrice diagonale $\Lambda_s$ des valeurs propres de signal de $\mathbf{R}_{xx}{}^{12}(t_k)$ - $\sigma 2\mathbf{I}_{N_{12}}$ sachant que

$$\mathbf{R}_{xx}{}^{12}(t_k) - \sigma^2 \mathbf{I}_{N_{12}} = \tilde{\mathbf{E}}_s^{12}(t_k)\Lambda_s \tilde{\mathbf{E}}_s^{12}(t_k)^H = \begin{bmatrix} \mathbf{R}^1 - \sigma^2 \mathbf{I}_P & \\ & \mathbf{R}^2 - \sigma^2 \mathbf{I}_P \end{bmatrix} = \begin{bmatrix} \tilde{\mathbf{E}}_1 \Lambda_s \tilde{\mathbf{E}}_1^H & \\ & \tilde{\mathbf{E}}_2 \Lambda_s \tilde{\mathbf{E}}_2^H \end{bmatrix} \tag{28}$$

Le calcul de $\Lambda_s$ est alors :

$$\Lambda_s = \frac{\left(\tilde{\mathbf{E}}_1\right)^\# \left(\mathbf{R}^1 - \sigma^2 \mathbf{I}_P\right)\left(\tilde{\mathbf{E}}_1^H\right)^\# + \left(\tilde{\mathbf{E}}_2\right)^\# \left(\mathbf{R}^2 - \sigma^2 \mathbf{I}_P\right)\left(\tilde{\mathbf{E}}_2^H\right)^\#}{2} \tag{29}$$

**Etape 5.B** : Reconstitution de la matrice de covariance en effectuant

$$\mathbf{R}_{xx}{}^{12}(t_k) = \tilde{\mathbf{E}}_s^{12}(t_k)\Lambda_s \tilde{\mathbf{E}}_s^{12}(t_k)^H + \sigma^2 \mathbf{I}_{N_{12}} \tag{30}$$

Dans le cas où le nombre de commutations est supérieur à 2, $C>2$, en supposant que, pour $1 \le c \le C$ :

- Les paramètres de type angles d'arrivée sont constants et donc la matrice A, qui est la matrice des vecteurs directeurs des trajets sur tous les capteurs du réseau, est la même sur la durée $CT$ de l'ensemble des commutations. La matrice $\mathbf{A}_c = \mathbf{A}(\Psi_c,:)$, observée à la $c^{\text{ième}}$ commutation, est la matrice des vecteurs directeurs des trajets du sous-réseau dont les indices sont ceux de l'ensemble $\Psi_c{}^{\text{ème}}$ et est algébriquement une sous-matrice de A.
- les matrices de covariance des trajets varient peu en vérifiant $\mathbf{R}_{ss}(t_k+(c-1)T) \approx \mathbf{R}_{ss}(t_k)$,
- le nombre d'antennes communes à deux commutations successives doit être au moins égal au rang des matrices $\mathbf{R}_{xx}{}^c(t_k+(c-1)T)$ qui vaut $R$.

En présence de $P_0$ trajets, on a généralement $R \le P_0$ car une partie des trajets peuvent être cohérents. L'algorithme de reconstitution de l'espace signal est itératif. Les étapes de reconstitution de l'espace signal sont données dans le tableau 3 :

Etapes C de reconstitution de l'espace signal avec C>2 Commutations

**Etape 1.C** : Calcul de l'espace signal $\mathbf{E}_s^{12}(t_k)$ à partir des signaux $\mathbf{y}_1(t+t_k)$ et $\mathbf{y}_2(t+t_k+T)$ pour $0 \le t \le T$ selon les étapes du tableau 1: Utilisation du processus de reconstitution de l'espace signal avec deux commutations avec les deux instants $t_k$ et $t_k+T$. Les instants $t_k+(c-1)T$ $(c>2)$ permettent de généraliser l'approche pour un nombre de commutations supérieur à 2.

**Etape 2.C** : Initialisation à $c=3$ et $\mathbf{E}_s^{old}(t_k) = \mathbf{E}_s^{12}(t_k+T)$

**Etape 3.C** : Calcul de la moyenne temporelle $\mathbf{R}_{xx}{}^c(t_k+(c-1)T)$ selon l'expression (15) sur une durée $T$ de l'observation $\mathbf{y}_c(t+t_k+(c-1)T)$ pour $0 \le t \le T$. Décomposition en éléments propres de $\mathbf{R}_{xx}{}^c(t_k+(c-1)T)$ pour calculer l'espace signal $\mathbf{E}_s^c(t_k)$.

**Etape 4.C** : Décomposition des espaces signaux comme suit :
  - Espace signal ancien :

$$\mathbf{E}_s^{old}(t_k) = \begin{bmatrix} \mathbf{E}_{s,\cap}^{old} \\ \mathbf{E}_{s,\cup}^{old} \end{bmatrix}$$

  - Espace signal de la c-ième commutation obtenu à partir de la matrice       de covariance de la $(c-1)^{\text{ième}}$ commutation, $\mathbf{R}_{xx}{}^c(t_k + (c-1)T)$ :

(suite)

$$\mathbf{E}_s^c\left(t_k\right)=\begin{bmatrix}\mathbf{E}_{s,\cup}^c\\\mathbf{E}_{s,\cap}^c\end{bmatrix}$$

**Etape 5.C :** Calcul de $\Omega$ tel que

$$\Omega=\left(\left(\mathbf{E}_{s,\cup}^{old}\right)^H\mathbf{E}_{s,\cup}^{old}\right)^{-1}\left(\mathbf{E}_{s,\cup}^{old}\right)^H\mathbf{E}_{s,\cup}^c$$

**Etape 6.C :** Reconstruction des espaces signaux aux instants $t_k+(c\text{-}2)T$ et $t_k+(c\text{-}1)T$

$$\mathbf{E}_s^{1\ldots c}\left(t_k+(c-2)T\right)=\begin{bmatrix}\mathbf{E}_{s,\cap}^{old}\\\mathbf{E}_{s,\cup}^{old}\\\mathbf{E}_{s,\cap}^c\Omega^{-1}\end{bmatrix}\quad\text{et}\quad\mathbf{E}_s^{1\ldots c}\left(t_k+(c-1)T\right)=\begin{bmatrix}\mathbf{E}_{s,\cap}^{old}\Omega\\\mathbf{E}_{s,\cup}^c\\\mathbf{E}_{s,\cap}^c\end{bmatrix},$$

la notation 1,...,c indique

l'espace signal reconstitué avec les commutations allant de 1 à c.

**Etape 7.C :** Si c<C alors c=c+1, $\mathbf{E}_s^{old}\left(t_k\right)=\mathbf{E}_s^{1\ldots c}\left(t_k+(c-1)T\right)$ et retour à l'Etape 3.C.

**Etape 8.C :** L'espace signal final est $\mathbf{E}_s\left(t_k\right)=\mathbf{E}_s^{1\ldots C}\left(t_k+(C-1)T\right)$

**Etape 9.C :** Orthonormalisation de la matrice $\mathbf{E}_s(t_k)$ pour obtenir $\tilde{\mathbf{E}}_s(t_k)$. Extraction des matrices $\mathbf{E}_c$ de la matrice $\mathbf{E}_s(t_k)$ sachant que

$$\begin{cases}\tilde{\mathbf{E}}_c=\tilde{\mathbf{E}}_s\left(t_k\right)\left(\Psi_c,:\right)\\\Psi_c:\text{Ensemble des indices de capteurs de la }c^{\text{ième}}\text{ commutation}\end{cases}$$

**Etape 10.C :** Test de Validité de la commutation selon les équations (25) : Si selon le test la reconstitution de l'espace signal est OK alors Commut_OK=1 sinon Commut_OK=0.

**Etape 11.C** : Le projecteur signal final est $\Pi(t_k+(c-1)T)=\mathbf{E}_s(t_k)(\mathbf{E}_s(t_k))^{\#}$

En présence de C commutations, lorsque la stationnarité des paramètres est vérifiée sur une durée de $CL$, les matrices de covariance $\mathbf{C}_{xx}^c(t_k+(c\text{-}1)T)$ pour ($1\le c\le C$) de l'étape 3.C peuvent être remplacées par les matrices $\mathbf{C}_{xx}^c(t_k+(c\text{-}1)T)$ telles que :

$$\mathbf{C}_{xx}^c\left(t_k+(c-1)T\right)=\sum_{i=1}^L\mathbf{R}_{xx}^c\left(t_k+(i-1)CT+(c-1)T\right)\tag{31}$$

Lorsque la reconstitution de l'espace signal est correcte avec J>η, on peut envisager de reconstituer la matrice de covariance $\mathbf{R}_{xx}(t_k)$ sur les $N$ capteurs à partir de l'espace signal reconstitué $\tilde{\mathbf{E}}_s(t_k)$ selon le processus du tableau 2. Les étapes sont décrites dans le tableau 4 :

Etapes D de Reconstitution de la matrice de covariance avec C Commutations

**Etape 1.D :** Calcul du niveau de bruit $\sigma^2$ en moyennant les valeurs propres de bruit des matrices $\mathbf{R}^c=\mathbf{R}_{xx}^c(t_k+(c\text{-}1)T)$ (où $\mathbf{R}^1=\mathbf{C}_{xx}^c(t_k+(c\text{-}1)T)$ selon (15)(26),

**Etape 2.D :** Ortho-normalisation des colonnes de la matrice $\tilde{\mathbf{E}}_s(t_k)$ qui ne sont pas orthonormées a priori. On obtient ainsi la matrice $\tilde{\mathbf{E}}_s(t_k)$,

**Etape 3.D :** Décomposition de la matrice $\tilde{\mathbf{E}}_s(t_k)$ en deux parties :

$$\tilde{\mathbf{E}}_s\left(t_k\right)=\mathbf{E}_s\left(t_k\right)\tilde{\mathbf{T}}\quad\text{sachant que}\begin{cases}\mathbf{R}^c=\tilde{\mathbf{E}}_c\Lambda_s\left(\tilde{\mathbf{E}}_c\right)^H\text{ pour }1\le c\le C\\\tilde{\mathbf{E}}_c=\tilde{\mathbf{E}}_s\left(t_k\right)\left(\Psi_c,:\right)\\\Psi_c:\text{Ensemble des indices de capteurs de la }c^{\text{ième}}\text{ commutation}\end{cases}\tag{32}$$

**Etape 4.D :** Calcul de la matrice diagonale $\Lambda_s$ des valeurs propres de signal de $\mathbf{R}_{xx}(t_k)-\sigma^2\mathbf{I}_N$ sachant que :

(suite)

$$\mathbf{R}_{xx}(t_k) - \sigma^2 \mathbf{I}_N = \tilde{\mathbf{E}}_s(t_k) \Lambda_s \tilde{\mathbf{E}}_s(t_k)^H = \begin{bmatrix} \mathbf{R}^1 - \sigma^2 \mathbf{I}_P & & \\ & \ddots & \\ & & \mathbf{R}^C - \sigma^2 \mathbf{I}_P \end{bmatrix} = \begin{bmatrix} \tilde{\mathbf{E}}_1 \Lambda_s \tilde{\mathbf{E}}_1^H & & \\ & \ddots & \\ & & \tilde{\mathbf{E}}_C \Lambda_s \tilde{\mathbf{E}}_C^H \end{bmatrix} \qquad (33)$$

Le calcul de $\Lambda_s$ est alors:

$$\Lambda_s = \frac{\sum_{c=1}^{C} (\tilde{\mathbf{E}}_c)^{\#} (\mathbf{R}^c - \sigma^2 \mathbf{I}_P) (\tilde{\mathbf{E}}_c^H)^{\#}}{C} \qquad (34)$$

**Etape 5.D :** Reconstitution de la matrice de covariance en effectuant :

$$\mathbf{R}_{xx}(t_k) = \tilde{\mathbf{E}}_s(t_k) \Lambda_s \tilde{\mathbf{E}}_s(t_k)^H + \sigma^2 \mathbf{I}_N \qquad (35)$$

La description présente maintenant les algorithmes de goniométrie après la reconstitution de l'espace signal et/ou de la matrice de covariance sur le réseau de N capteurs.

Lorsque le vecteur directeur a $(\Theta_{mp})$ dépend seulement de la direction d'arrivée $\Theta_{mp}$ du trajet, on peut alors envisager des algorithmes de type MUSIC ou formation de voies pour estimer les différentes incidences $\Theta_{mp}$.

En particulier l'algorithme formation de voies utilise la matrice de covariance $\mathbf{R}_{xx}(t_k)$ calculée dans le tableau 4 pour estimer les incidences de la manière suivante :

$$\hat{\Theta}_{mp} = \max_{\Theta} \left( J_{FV}(\Theta) \right) \quad \text{avec } J_{FV}(\Theta) = \frac{\mathbf{a}(\Theta)^H \mathbf{R}_{xx}(t_k) \mathbf{a}(\Theta)}{\mathbf{a}(\Theta)^H \mathbf{a}(\Theta)} \qquad (36)$$

L'algorithme MUSIC estime les directions d'arrivées des trajets à partir de l'espace signal $E_s(t_k)$ calculée dans le tableau 3. Une façon simple d'appliquer MUSIC est d'effectuer

$$\hat{\Theta}_{mp} = \max_{\Theta} \left( J_{MUSIC}(\Theta) \right) \quad \text{avec } \begin{cases} J_{MUSIC}(\Theta) = \dfrac{\mathbf{a}(\Theta)^H \, \boldsymbol{\Pi} \, \mathbf{a}(\Theta)}{\mathbf{a}(\Theta)^H \mathbf{a}(\Theta)} \\[2ex] \boldsymbol{\Pi} = \mathbf{E}_s(t_k) \left( \mathbf{E}_s(t_k)^H \mathbf{E}_s(t_k) \right)^{-1} \mathbf{E}_s(t_k)^H \end{cases} \qquad (37)$$

On peut améliorer l'estimation du projecteur signal $\pi$ de MUSIC à partir des espaces signaux incomplets du tableau 3 qui sont notés par $\mathbf{E}_s^1(t_k)$ et $\mathbf{E}_{s,1\ldots c}(t_k + (c-1)T)$ pour $2 \leq c \leq C$, en effectuant les étapes décrites dans le tableau 5:

Etapes E d'amélioration de l'estimation du calcul du projecteur signal de MUSIC :

**Etape 1.E :** En remplaçant $\mathbf{E}_s^2(t_k)$ par $\mathbf{E}_s^{1\ldots C}(t_k + (C-1)T)$ calcul de l'espace signal complet $\mathbf{X}(t_k)$ à l'instant $t_k$ avec les étapes 3.A à 5.A du tableau 1 qui donne alors $\mathbf{X}(t_k) \leftarrow \mathbf{E}_s^{12}(t_k)$ et initialisation à $c=2$,

**Etape 2.E :** En remplaçant $\mathbf{E}_s^1(t_k)$ par $\mathbf{E}_s^{1\ldots c}(t_k + (c-1)T)$ et $\mathbf{E}_s^2(t_k)$ par $\mathbf{E}_s^{1\ldots C}(t_k + (C-1)T)$ calcul de l'espace signal complet $\mathbf{X}(t_k + (c-1)T)$ à l'instant $t_k + (c-1)T$ avec les étapes 3.A à 5.A du tableau 1 qui donne alors $\mathbf{X}(t_k + (c-1)T) \leftarrow \mathbf{E}_s^{12}(t_k)$,

**Etape 3.E :** $c=c+1$. Si $c<C$ alors retour à l'étape **2.E**,

**Etape 4.E :** Calcul d'une matrice de covariance fictive telle que

$$\mathbf{R} = \sum_{c=1}^{C} \mathbf{X}(t_k + (c-1)T) \mathbf{X}(t_k + (c-1)T)^H$$

(suite)

| |
|---|
| **Etape 5.E :** Calcul du projecteur signal $\Pi$ de MUSIC à partir de la décomposition en éléments propres de **R** et sachant que le rang de l'espace signal est celui des matrices $\mathbf{R}_{xx}{}^c(t_k + (c-1)T)$ (où $\mathbf{C}_{xx}{}^c(t_k + (c-1)T)$ selon (15)(26) des matrices de covariance sur les différentes commutations, **Etape 6.E :** Calcul des incidences des trajets selon l'équation (37). |

On peut aussi envisager des algorithmes de goniométrie en diversité de polarisation où le vecteur directeur se modélise de la manière suivante

$$\mathbf{a}(\boldsymbol{\Theta},\mathbf{P}) = \mathbf{a}_1(\boldsymbol{\Theta})P_1 + \mathbf{a}_2(\boldsymbol{\Theta})P_2 = \mathbf{D}(\boldsymbol{\Theta})\mathbf{P} \quad \text{avec} \begin{cases} \mathbf{D}(\boldsymbol{\Theta}) = \begin{bmatrix} \mathbf{a}_1(\boldsymbol{\Theta}) & \mathbf{a}_2(\boldsymbol{\Theta}) \end{bmatrix} \\ \mathbf{P} = \begin{bmatrix} P_1 \\ P_2 \end{bmatrix} \end{cases} \tag{38}$$

où $\mathbf{a}_i(\Theta)$ est la réponse du réseau suivant la $i^{\text{ème}}$ polarisation de coefficient $P_i$. L'algorithme formation de voie de l'équation (36) se décline alors de la manière suivante

$$\hat{\boldsymbol{\Theta}}_{mp} = \max_{\boldsymbol{\Theta}}\left(J_{FV}{}^{DP}(\boldsymbol{\Theta})\right) \quad \text{avec} \begin{cases} J_{FV}{}^{DP}(\boldsymbol{\Theta}) = \lambda_{\max}\left(\left(\mathbf{Q}_2(\boldsymbol{\Theta})\right)^{-1}\mathbf{Q}_1(\boldsymbol{\Theta})\right) \\ \mathbf{Q}_1(\boldsymbol{\Theta}) = \mathbf{D}(\boldsymbol{\Theta})^H \mathbf{R}_{xx}(t_k)\mathbf{D}(\boldsymbol{\Theta}) \\ \mathbf{Q}_1(\boldsymbol{\Theta}) = \mathbf{D}(\boldsymbol{\Theta})^H \mathbf{D}(\boldsymbol{\Theta}) \end{cases} \tag{39}$$

où $\lambda_{\max}(Q)$ désigne la valeur propre maximale de Q. De la même manière, il est possible d'appliquer l'algorithme MUSIC de l'équation (37) en effectuant

$$\hat{\boldsymbol{\Theta}}_{mp} = \max_{\boldsymbol{\Theta}}\left(J_{MUSIC}{}^{DP}(\boldsymbol{\Theta})\right) \quad \text{avec} \begin{cases} J_{FV}{}^{DP}(\boldsymbol{\Theta}) = \lambda_{\max}\left(\left(\mathbf{Q}_2(\boldsymbol{\Theta})\right)^{-1}\mathbf{Q}_1(\boldsymbol{\Theta})\right) \\ \mathbf{Q}_1(\boldsymbol{\Theta}) = \mathbf{D}(\boldsymbol{\Theta})^H \boldsymbol{\Pi} \mathbf{D}(\boldsymbol{\Theta}) \\ \mathbf{Q}_1(\boldsymbol{\Theta}) = \mathbf{D}(\boldsymbol{\Theta})^H \mathbf{D}(\boldsymbol{\Theta}) \end{cases} \tag{40}$$

où $\pi$ est le projecteur signal de MUSIC qui est soit calculé selon (37) soit selon les étapes E du tableau 5.

Les techniques de goniométrie en diversité de polarisation où le vecteur directeur s'écrit $\mathbf{a}(\Theta,\mathbf{P}) = \mathbf{D}(\Theta)\mathbf{P}$ fait partie d'un domaine de goniométrie plus large où le vecteur directeur dépend de l'incidence de la source $\Theta$ ainsi que d'un vecteur de paramètres de nuisance noté $\eta$ dont la polarisation de la source peu faire partie mais aussi d'autres paramètres tel que la distance émetteur-récepteur en front d'onde courbe ou encore la direction d'arrivée des trajets cohérents.

Le procédé décrit dans la demande de brevet US 7952521 explique les différents sens physique du vecteur $\eta$ dont les composantes correspondent à divers types de distorsions du front d'onde d'une source. Il est ainsi montré que ce vecteur peut souvent s'écrire sous la forme $\mathbf{a}(\Theta,\eta) = \mathbf{D}(\Theta)\eta$ qui permet d'effectuer une recherche séparée de la direction d'arrivée et du paramètre de nuisance $\eta$ comme dans le cas de la diversité de polarisation où $\eta$ est le vecteur de polarisation.

En prenant le projecteur signal issus de l'algorithme de commutation les algorithmes du procédé décrit dans la demande de brevet US 7952521 deviennent applicables. Il faut remarquer que le nombre de composantes du vecteur de nuisance $\eta$ nécessite un nombre $N$ de capteurs largement supérieur à ce nombre de composantes pour que les angles d'arrivée des sources soient identifiables. Un procédé permettant de reconstituer l'espace signal avec moins de voies de réception que d'antennes devient alors intéressant pour mettre en oeuvre les algorithmes de goniométrie multi-paramètres dans de bonnes conditions où les angles d'arrivées sont identifiables.

La figure 7 schématise un synoptique d'acquisition du signal sur les capteurs k à N de la commutation 3 à l'instant $t_{k+2}$. On remarque sur cette figure que les capteurs k et k+1 sont communs, 70, aux commutations 2 et 3.

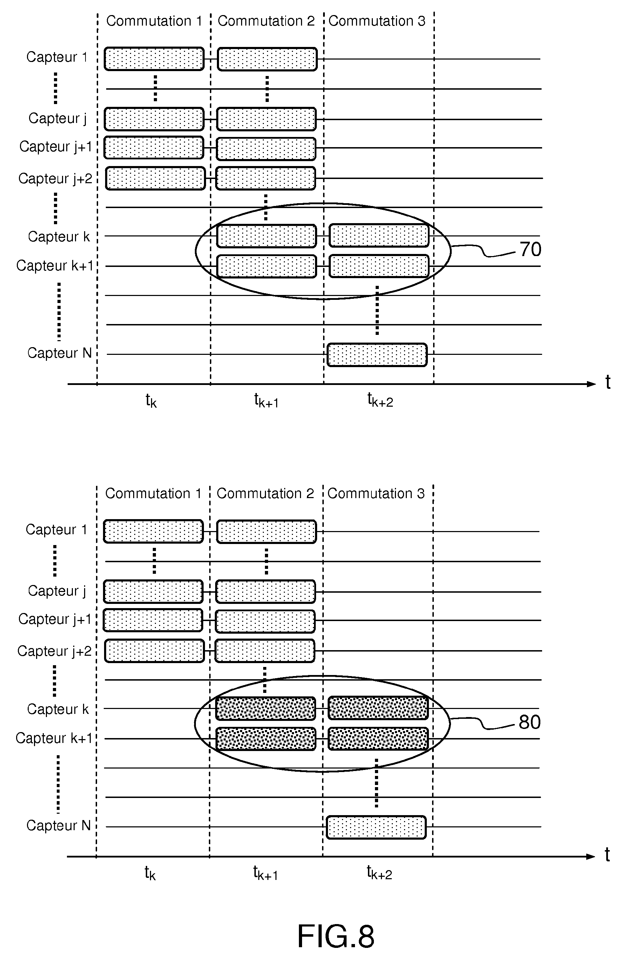

La figure 8 schématise, 80, la base d'estimation de la matrice de rephasage $\Omega_{23}$ à l'aide des capteurs communs aux commutations 2 et 3.

Dans un contexte où le nombre de voies de réception est strictement inférieur au nombre de capteurs, le procédé peut comporter un sous-procédé d'auto-tarage qui être décrit.

En pratique les récepteurs ont des gains $\rho_i$ pour $(1 \leq i \leq P)$ non identiques qui évoluent au cours du temps. Dans la plupart des algorithmes de goniométrie ces coefficients sont estimés avec un procédé dit de « tarage ». Ce procédé commute les entrées des récepteurs vers un même signal couvrant la bande passante des récepteurs. On effectue alors une mesure de l'amplitude complexe de chacune des voies de réceptions pour obtenir après une correction des récepteurs ayant le même gain. Cette procédure est contraignante car nécessite de déconnecter régulièrement les récepteurs des capteurs du réseau d'antennes.

Dans ce sous-procédé, on propose une technique permettant d'estimer les gains $\rho_i$ sans se déconnecter de la réception des signaux capteurs. Le sous-procédé exploite le faite que les coefficients $\rho_i$ soient les mêmes sur la durée de l'ensemble des commutations. Lorsque le signal sur la $c^{\text{ième}}$ commutation n'a pas été compensé par un processus de tarage, les matrices des vecteurs directeurs des trajets s'écrivent $\tilde{\mathbf{A}}_c = \Gamma_c \mathbf{A}(\Psi_c,:)$ au lieu de $\mathbf{A}_c = \mathbf{A}(\Psi_c,:)$. La matrice $\Gamma_c$ contient sur sa diagonale les coefficients $\rho_i$ tel que

$$\Gamma_c = \begin{bmatrix} \rho_{i_1} & 0 & 0 \\ 0 & \ddots & 0 \\ 0 & 0 & \rho_{i_P} \end{bmatrix} \text{ sachant que } \Psi_c = \{i_1,...,i_P\} \text{ et } 1 \leq i_p \leq P \qquad (41)$$

Où $\Psi_c$ est l'ensemble des indices de la $c^{\text{ième}}$ commutation. En supposant que les capteurs en commun soient les mêmes entre deux commutations successives, les matrices $\tilde{\mathbf{A}}_1$ et $\tilde{\mathbf{A}}_2$ s'écrivent alors

$$\tilde{\mathbf{A}}_1 = \begin{bmatrix} \Gamma_{11}\mathbf{B}_1 \\ \Gamma_{12}\mathbf{B}_2 \end{bmatrix} \text{ et } \tilde{\mathbf{A}}_2 = \begin{bmatrix} \Gamma_{12}\mathbf{B}_2 \\ \Gamma_{22}\mathbf{B}_3 \end{bmatrix} \text{ sachant que } \begin{cases} \Gamma_1 = \begin{bmatrix} \Gamma_{11} & 0 \\ 0 & \Gamma_{12} \end{bmatrix} \text{ et } \Gamma_2 = \begin{bmatrix} \Gamma_{12} & 0 \\ 0 & \Gamma_{22} \end{bmatrix} \\ \mathbf{A}_1 = \begin{bmatrix} \mathbf{B}_1 \\ \mathbf{B}_2 \end{bmatrix} \text{ et } \mathbf{A}_2 = \begin{bmatrix} \mathbf{B}_2 \\ \mathbf{B}_3 \end{bmatrix} \end{cases} \qquad (42)$$

En appliquant les étapes de reconstruction de l'espace signal du tableau 1, on peut montrer que l'espace signal reconstitué $\tilde{\mathbf{E}}_s^{12}(t_k + T)$ s'écrit de la manière suivante lorsque $\mathbf{R}_{xx}^c(t_k) = \tilde{\mathbf{A}}_c \mathbf{R}_{ss}(t_k + (c-1)T)(\tilde{\mathbf{A}}_c)^H + \sigma^2 \mathbf{I}_P$

$$\tilde{\mathbf{E}}_s^{12}(t_k + T) = \begin{bmatrix} \Gamma_{11}\mathbf{B}_1 \\ \Gamma_{12}\mathbf{B}_2 \\ \Gamma_{22}\mathbf{B}_3 \end{bmatrix} \mathbf{T}_k^2 \text{ sachant que } \mathbf{E}_s^1(t_k) = \begin{bmatrix} \Gamma_{11}\mathbf{B}_1 \\ \Gamma_{12}\mathbf{B}_2 \end{bmatrix} \mathbf{T}_k^1 \text{ et } \mathbf{E}_s^2(t_k) = \begin{bmatrix} \Gamma_{12}\mathbf{B}_2 \\ \Gamma_{22}\mathbf{B}_3 \end{bmatrix} \mathbf{T}_k^2 \qquad (43)$$

Selon (41), les matrices diagonales $\Gamma_{ij}$ dépendent uniquement des P coefficients $\rho_{i_p}$ pour $(1 \leq i_p \leq P)$. Plus précisément le coefficient $\rho_{i_p}$ de distorsion d'un capteur est celui de la voie de réception sur lequel il a été acquis c'est à dire la $(i_p)^{\text{ième}}$ voie. Par exemple si $\Psi_1 = \{1,2,\cdots,P\}$ et $\Psi_2 = \{K+1, K+2,...,K+P\}$, le lien entre l'espace signal $\tilde{\mathbf{E}}_s^{12}(t_k + T)$ sans tarage et l'espace signal $\mathbf{E}_s^{12}(t_k + T)$ avec tarage est le suivant

$$\tilde{\mathbf{E}}_s^{12}(t_k + T) = \begin{bmatrix} \Gamma_{11} & & \\ & \Gamma_{12} & \\ & & \Gamma_{22} \end{bmatrix} \mathbf{E}_s^{12}(t_k + T) \text{ sachant que } \begin{cases} \Gamma_{11} = \begin{bmatrix} \rho_1 & 0 & 0 \\ 0 & \ddots & 0 \\ 0 & 0 & \rho_K \end{bmatrix} \text{ et } \Gamma_{22} = \begin{bmatrix} \rho_{P+1} & 0 & 0 \\ 0 & \ddots & 0 \\ 0 & 0 & \rho_{K+P} \end{bmatrix} \\ \Gamma_{12} = \begin{bmatrix} \rho_{K+1} & 0 & 0 \\ 0 & \ddots & 0 \\ 0 & 0 & \rho_P \end{bmatrix} \end{cases} \qquad (44)$$

où $\Gamma_{12}$ contient les coefficients de tarage des voies et capteurs en commun entre les deux commutations.

Une première alternative pour résoudre ce problème est d'utiliser l'algorithme d'autocalibration de Friedlander décrit dans le document intitulé « Eigenstructure methods for direction finding with sensor gain and phase uncertainties ICASSP 88, New York, pp 2681-2684 vol.5, qui estime les coefficients de tarage $\rho_1$ à $\rho_P$ conjointement à la direction d'arrivée des trajets. L'avantage du procédé selon l'invention est que l'espace signal reconstitué contient des coefficients de tarage pouvant être identiques pour plusieurs capteurs. Cette redondance permettra d'appliquer le même principe que Friedlander avec des coefficients redondant qui permettront de lever l'ambiguïté en présence d'une seule source.

L'algorithme de Friedlander est basé sur la relation suivante entre le vecteur directeur $\tilde{\mathbf{a}}(\Theta,\rho)$ sans tarage et le vecteur directeur $\mathbf{a}(\Theta)$ de l'équation (1) qui est avec tarage

$$\tilde{\mathbf{a}}(\Theta,\rho) = \begin{bmatrix} \rho_1 & 0 & 0 \\ 0 & \ddots & 0 \\ 0 & 0 & \rho_P \end{bmatrix} \mathbf{a}(\Theta) = \mathbf{D}(\Theta)\rho \quad \text{avec } \rho = \begin{bmatrix} \rho_1 \\ \vdots \\ \rho_P \end{bmatrix} \tag{45}$$

La matrice $\mathbf{D}(\Theta)$ de dimension $N\text{x}P$ ($N$ : nombre de capteurs du réseau) contient les composantes du vecteur $\mathbf{a}(\Theta)$. Dans le papier de Friedlander le nombre N de capteurs est égal au nombre $P$ de voies. L'algorithme est itératif suivant les deux étapes suivantes

**Etape.0** : Initialisation à $\rho_1 = \cdots = \rho_P = 1$

**Etape.1** : Application de MUSIC avec le vecteur directeur $\tilde{\mathbf{a}}(\Theta,\rho)$ et le projecteur signal de MUSIC qui dans notre cas est la matrice $\Pi$ de l'équation (37). On obtient alors les estimés $\hat{\Theta}_m$ des directions des sources pour $1 \le m \le M$. Arrêt du processus lorsque le niveau du critère de MUSIC est proche de 1.

**Etape.2** : Estimation des coefficients de tarage $\rho$ en minimisant la forme quadratique suivante

$$\hat{\rho} = \max_{\rho} J(\rho) \quad \text{avec} \begin{cases} J(\rho) = \sum_{m=1}^{M} \tilde{\mathbf{a}}(\hat{\Theta}_m,\rho)^H \, \Pi \, \tilde{\mathbf{a}}(\hat{\Theta}_m,\rho) = \rho^H Q\rho \\ Q = \sum_{m=1}^{M} \mathbf{D}(\hat{\Theta}_m)^H \, \Pi \, \mathbf{D}(\hat{\Theta}_m) \end{cases} \tag{46}$$

Le vecteur des coefficients est alors le vecteur propre de **Q** associé à sa valeur propre principale et retour à l'étape.1. Les étapes itératives précédentes ont l'inconvénient d'avoir une connaissance initiale des coefficients de tarage assez proche de la réalité. L'approche peut être intéressante pour une mise à jour du tarage au fils des acquisitions et du temps. Dans la première approche et sachant que le nombre P de voies est strictement inférieur au nombre de capteurs on peut effectuer directement l'optimisation en exécutant les étapes décrites dans le tableau 6 : Etapes F de la première version de l'auto-tarage :

---

**Etape 1.F** : Calcul du projecteur signal $\Pi = \Pi(t_k + (C - 1)T)$ selon les étapes du tableau 3

Etape 2.F : Recherche des incidences des sources en minimisant le critère suivant

$$\hat{\Theta}_m = \max_{\rho} J^1_{auto}(\rho) \quad \text{avec} \begin{cases} J^1_{auto}(\Theta) = \rho^H Q^1_{auto}(\Theta)\rho \\ Q^1_{auto}(\Theta) = \mathbf{D}(\Theta)^H \, \Pi \, \mathbf{D}(\Theta) \end{cases}$$

**Etape 3.F** : Recherche des coefficients de tarage comme il est décrit dans le document de « B.Friedlander Eigenstructure methods for direction finding with sensor gain and phase uncertainties ICASSP 88, NewYork pp2681 - 2684 vol.5» en effectuant

$$\hat{\rho} = \max_{\rho} J(\rho) \quad \text{avec} \begin{cases} J(\rho) = \sum_{m=1}^{M} \tilde{\mathbf{a}}(\hat{\Theta}_m,\rho)^H \, \Pi \, \tilde{\mathbf{a}}(\hat{\Theta}_m,\rho) = \rho^H Q\rho \\ Q = \sum_{m=1}^{M} \mathbf{D}(\hat{\Theta}_m)^H \, \Pi \, \mathbf{D}(\hat{\Theta}_m) \end{cases}$$

---

La première variante a l'inconvénient de nécessiter l'estimation des angles d'arrivées conjointement aux coefficients de tarage qui sont les composantes du vecteur ρ. Pour contourner ce problème, une alternative est d'ajouter des commutations supplémentaires de façon à ce que les capteurs d'au moins un sous-réseau soient connectés à des voies de réception différentes. On propose dans la suite un exemple de processus qui n'est pas unique.

C'est ainsi que lorsque C commutations sont nécessaires pour reconstituer l'ensemble du réseau, on propose dans la seconde version de l'auto-tarage d'ajouter par exemple deux commutations de tel sorte que $\Psi_1 = \{ 1,2\cdots, P \}$, $\Psi_2 = \{K + 1, K + 2,\cdots, P + K\}$ puis pour les deux dernières commutations que $\Psi_{C+1} = \{2,3,\cdots, P,1\}$ et $\Psi_{C+2} = \{K + 2\cdots, P + K, K + 1\}$. L'objectif est d'avoir les modélisations suivantes différentes des espaces signaux reconstitués des commutations 1 et 2 puis C+1 et C+2,

$$\tilde{\mathbf{E}}_s^{12}\left(t_k + T\right) = \begin{bmatrix} \rho_1 & 0 & & 0 \\ 0 & \ddots & & \\ & & \rho_P & 0 \\ 0 & & 0 & \ddots \end{bmatrix} \mathbf{E}_s^{12}\left(t_k + T\right)$$

et

$$\tilde{\mathbf{E}}_s^{(c+1)(c+2)}\left(t_k + \left(C+1\right)T\right) = \begin{bmatrix} \rho_2 & 0 & & 0 \\ 0 & \ddots & & \\ & & \rho_P & 0 \\ 0 & & 0 & \rho_1 \\ & & & & 0 \end{bmatrix} \mathbf{E}_s^{c(c+1)}\left(t_k + \left(C+1\right)T\right)$$

(47)

où les espaces signaux $\mathbf{E}_s^{12}\left(t_k + T\right)$ et $\mathbf{E}_s^{(C+1)(C+2)}\left(t_k + \left(C+1\right)T\right)$ avec compensation du tarage engendrent la même base et donc conduisent au même projecteur bruit suivant sur deux commutations tel que

$$\mathbf{\Pi}_{12} = \mathbf{\Pi}_{(C+1)(C+2)} \text{ avec } \mathbf{\Pi}_{ij} = \mathbf{E}_s^{ij}\left(\mathbf{E}_s^{ij\,H}\mathbf{E}_s^{ij}\right)^{-1}\mathbf{E}_s^{ij\,H}$$

(48)

La relation entre les espaces signaux sans le tarage est alors :

$$\tilde{\mathbf{E}}_s^{12}\left(t_k + T\right) = \begin{bmatrix} \rho_1 / \rho_2 & 0 & & 0 \\ 0 & \ddots & & \\ & & \rho_{P-1} / \rho_P & 0 \\ 0 & & 0 & \rho_P / \rho_1 \\ & & & & \ddots \end{bmatrix} \tilde{\mathbf{E}}_s^{(c+1)(c+2)}\left(t_k + \left(C+1\right)T\right)$$

(49)

L'objectif de la deuxième version de l'auto-tarage est d'estimer les rapports $\rho_p / \rho_{p+1}$ et $\rho_P / \rho_1$ à partir des espaces signaux reconstitués $\tilde{\mathbf{E}}_s^{12}\left(t_k + T\right)$ et $\tilde{\mathbf{E}}_s^{(c+1)(c+2)}\left(t_k + \left(C+1\right)T\right)$ selon le principe de Friedlander «B.Friedlander Eigenstructure methods for direction finding with sensor gain and phase uncertainties ICASSP 88, NewYork pp2681 - 2684 vol.5 ». Pour cela on pose :

**EP 2 857 856 B1**

$$\tilde{\mathbf{E}}_s^{12}\left(t_k+T\right)=\begin{bmatrix}\mathbf{u}_1 & \cdots & \mathbf{u}_R\end{bmatrix}\quad\text{et}\quad\tilde{\mathbf{E}}_s^{(c+1)(c+2)}\left(t_k+(C+1)T\right)=\begin{bmatrix}\mathbf{v}_1 & \cdots & \mathbf{v}_R\end{bmatrix}$$

$$\mathbf{u}_r=\mathbf{V}_r\,\partial\boldsymbol{\rho}\ \text{ avec }\partial\boldsymbol{\rho}=\begin{bmatrix}\rho_1/\rho_2\\ \vdots\\ \rho_{P-1}/\rho_P\\ \rho_P/\rho_2\end{bmatrix}\ \text{ et }\quad\mathbf{V}_r=\begin{bmatrix}\mathbf{v}_r(1) & 0 & 0\\ 0 & \ddots & 0\\ 0 & 0 & \mathbf{v}_r(P)\\ \mathbf{v}_r(1) & 0 & 0\\ & \ddots & \end{bmatrix}\qquad(50)$$

où la matrice $\mathbf{V}_r$ est composée des composantes du vecteur $\mathbf{v}_r$. Les étapes de la deuxième variante de l'autotarage sont alors exposées dans le tableau 7 :

Etapes G de la deuxième version de l'auto-tarage :

| |
|---|
| **Etape 1.G :** Calcul sur C commutations de l'espace signal $\tilde{\mathbf{E}}_s(t_k)$ selon les étapes du tableau 3 |
| **Etape 2.G :** Extraction de l'espace signal $\tilde{\mathbf{E}}_s^{12}\left(t_k+T\right)$ issus de la reconstitution de l'espace signal avec les deux premières commutations. |
| **Etape 3.G :** Calcul de l'espace signal $\tilde{\mathbf{E}}_s^{(c+1)(c+2)}\left(t_k+(C+1)T\right)$ de la (C+1)$^{\text{ième}}$ commutation et de la (C+2)$^{\text{ième}}$ commutation selon les étapes du tableau 1 |
| **Etape 4.G :** Extraction des vecteurs $\mathbf{u}_r$ et $\mathbf{v}_r$ des matrices $\tilde{\mathbf{E}}_s^{12}\left(t_k+T\right)$ et $\tilde{\mathbf{E}}_s^{(c+1)(c+2)}\left(t_k+(C+1)T\right)$ selon l'équation (50), |
| **Etape 5.G :** Estimation du vecteur $\partial\rho$ en calculant le vecteur propre associé à la valeur propre maximale de la matrice $\mathbf{Q}$ suivante |
| $$\partial\hat{\boldsymbol{\rho}}=\max_{\boldsymbol{\rho}}J\left(\partial\boldsymbol{\rho}\right)\ \text{ avec }\begin{cases}J\left(\partial\boldsymbol{\rho}\right)=\partial\boldsymbol{\rho}^H\mathbf{Q}\partial\boldsymbol{\rho}\\[2mm]\mathbf{Q}=\displaystyle\sum_{m=1}^{R}\mathbf{V}_r^H\boldsymbol{\Pi}\mathbf{V}_r\\[2mm]\boldsymbol{\Pi}=\tilde{\mathbf{E}}_s^{12}\left(t_k+T\right)\left(\tilde{\mathbf{E}}_s^{12}\left(t_k+T\right)^H\tilde{\mathbf{E}}_s^{12}\left(t_k+T\right)\right)^{-1}\tilde{\mathbf{E}}_s^{12}\left(t_k+T\right)^H\end{cases}$$ |
| **Etape 5.G :** Déduction du vecteur $\partial\rho$ des rapports $\rho_p/\rho_1$ et de la relation entre l'espace signal $\tilde{\mathbf{E}}_s(t_k)$ sans tarage et de l'espace signal $\tilde{\mathbf{E}}_s(t_k)$ selon |
| une équation similaire à celle de l'équation (44) |
| **Etape 6.G :** Application d'un algorithme de goniométrie à partir de $\mathbf{E}_s(t_k)$. |

Le procédé selon l'invention exploite sans a priori le lien spatial qui existe entre deux commutations successives afin de reconstituer l'espace signal (ou la matrice de covariance) du réseau global. Cela se fait en exploitant la présence de $K\geq1$ capteur(s) en commun(s) entre deux commutations. Les capteurs en communs permettent de « remettre en phase » les sous-réseaux de deux commutations successives. En présence de $R$ groupes de sources non cohérentes, on montre qu'il est nécessaire d'utiliser R capteurs en communs pour cette « remise en phase ».

Le processus permet d'exploiter les propriétés du réseau total de $N$ capteurs comme si les signaux avaient été acquis par un système $N$ voies. Un nombre important de capteurs dans un réseau de goniométrie permet :

- d'améliorer les performances de goniométrie car la robustesse à une erreur de modélisation de la réponse du réseau de capteurs est plus importante.
- de prendre en compte plus facilement un modèle paramétrique complexe du front d'onde provenant d'une source comme envisagé dans le brevet du demandeur US 7952521.

**Revendications**

**1.** Procédé de goniométrie de signaux émis par plusieurs émetteurs dans un système comprenant N capteurs (13i) et P voies de réception Ri, avec P inférieur à N, et qui comporte au moins les étapes suivantes :

• sélectionner un premier sous-réseau de P capteurs, acquérir les signaux ou observations sur le premier sous-réseau à partir d'un premier instant $t_k$ sur une durée T,

• sélectionner un deuxième sous-réseau de P capteurs, acquérir les signaux ou observations sur le deuxième sous-réseau à partir d'un deuxième instant $t_k$ +T sur une même durée T, jusqu'à un C$^{\text{ième}}$ sous-réseau de P capteurs, acquérir les signaux ou observations sur le C$^{\text{ième}}$ sous-réseau à partir d'un C$^{\text{ième}}$ instant $t_k$ +(C-1)T sur une même durée T,

• déterminer à partir de la première observation et des observations suivantes acquises sur les C sous-réseaux, une première matrice de covariance des signaux $\mathbf{R}_{xx}^1(t_k)$ correspondant à la première observation et pour c tel que $2 \leq c \leq C$ les matrices de covariance $\mathbf{R}_{xx}^c(t_k + (c - 1)T)$ correspondant à la c$^{\text{ième}}$ observation, **caractérisé en ce qu'**il détermine pour $1 \leq c \leq C$ des espaces signaux $\mathbf{E}_s^c(t_k)$ de chacune des commutations à partir des matrices correspondantes $\mathbf{R}_{xx}^c(t_k +(c - 1)T)$, en initialisant $\mathbf{E}_s^{old}(t_k) = \mathbf{E}_s^1(t_k)$ tel qu'à la c$^{\text{ième}}$ itération $\mathbf{E}_s^{old}(t_k)$ et $\mathbf{E}_s^c(t_k)$ ont chacune une sous matrice $\mathbf{E}_{s,\cup}^c$ et $\mathbf{E}_{s,\cup}^c$ correspondant chacune aux capteurs en commun et une sous matrice $\mathbf{E}_{s,\cap}^{old}$ et $\mathbf{E}_{s,\cap}^c$ correspondant chacune aux capteurs non en commun,

• à partir des sous parties des espaces signaux $\mathbf{E}_{s,\cup}^c$ et $\mathbf{E}_{s,\cup}^c$ estimées sur les capteurs en commun, déterminer la matrice de passage $\Omega = \left(\left(\mathbf{E}_{s,\cup}^1\right)^H \mathbf{E}_{s,\cup}^1\right)^{-1} \left(\mathbf{E}_{s,\cup}^1\right)^H \mathbf{E}_{s,\cup}^2 = \left(\mathbf{T}_k^1\right)^{\#} \mathbf{T}_k^2$ entre les deux espaces signaux, reconstruire l'espace signal $\mathbf{E}_s^{1...c}\left(t_k +(c-1)T\right)$ correspondant au sous-réseau dont les signaux des capteurs acquis aux instants tk+(i-1)T pour $1 \leq i \leq c$, puis recalculer $\mathbf{E}_s^{old}(t_k)$ avec $\mathbf{E}_s^{old}\left(t_k\right) = \mathbf{E}_s^{1...c}\left(t_k +(c-1)T\right)$, à la Cième commutation,

• appliquer un algorithme de goniométrie sur l'espace signal reconstruit $\mathbf{E}_s^{1...C}\left(t_k +(C-1)T\right)$.

2. Procédé selon la revendication 1 **caractérisé en ce qu'**il comporte au moins les étapes suivantes :

• définir la matrice de covariance $\mathbf{R}_{xx}^c(t_k + (c - 1)T)$ des signaux de la c$^{\text{ième}}$ commutation, du c$^{\text{ième}}$ sous-réseau de capteurs intégré entre les instants $t_k + (c - 1)T$ à $t_k + cT$ $\hat{\mathbf{R}}_{xx}^c\left(t_k\right) = \frac{1}{T}\sum_{t=1}^{T}\mathbf{y}_c\left(t + t_k\right)\mathbf{y}_c\left(t + t_k\right)^H$ où $y_c$ correspond à une observation sur le c$^{\text{ième}}$ sous-réseau de capteurs,

• supposer que les matrices de covariance correspondant au signal ou observations $\mathbf{y}_c(t_k +(c - 1)T + t)$ s'écrivent de la manière suivante :

$$\begin{cases}\mathbf{R}_{xx}^1\left(t_k\right) = \mathbf{A}_1\mathbf{R}_{ss}\left(t_k\right)\left(\mathbf{A}_1\right)^H + \sigma^2\mathbf{I}_P \\ \mathbf{R}_{xx}^c\left(t_k +(c-1)T\right) \approx \mathbf{A}_c\mathbf{R}_{ss}\left(t_k +(c-1)T\right)\left(\mathbf{A}_c\right)^H + \sigma^2\mathbf{I}_P\end{cases} \quad \text{sachant que} \quad \begin{cases}\mathbf{R}_{xx}^c\left(t_k\right) = \frac{1}{T}\int_0^T E\left[\mathbf{y}_c\left(t + t_k\right)\mathbf{y}_c\left(t + t_k\right)^H\right]dt \\ \mathbf{R}_{ss}\left(t_k +(c-1)T\right) \approx \mathbf{R}_{ss}\left(t_k\right)\end{cases}$$

en fonction de la matrice de covariance des sources et d'une matrice $\mathbf{A}_c$ dont les colonnes correspondent aux vecteurs directeurs de chacune des sources incidentes sur le c$^{\text{ième}}$ sous-réseau de capteurs, où $\sigma^2$ correspond les valeurs propres du signal bruit,

**Etape 1.A :** calculer la moyenne temporelle $\mathbf{R}_{xx}^{c=1}(t_k)$ sur une durée $T$ de l'observation $\mathbf{y}_1(t + t_k)$ et décomposer en éléments propres $\mathbf{R}_{xx}^{c=1}(t_k)$ pour calculer l'espace signal $\mathbf{E}_s^1(t_k)$ sur la première commutation,

**Etape 2.A :** calculer la moyenne temporelle $\mathbf{R}_{xx}^{c=2}(t_k + T)$) sur une durée $T$ de l'observation $\mathbf{y}_2(t + t_k + T)$ et décomposer en éléments propres de $\mathbf{R}_{xx}^{c=2}(t_k + T)$ pour calculer l'espace signal $\mathbf{E}_s^2(t_k + T)$ pour la deuxième commutation,

**Etape 3.A :** extraire les sous matrices $\mathbf{E}_{s,\cap}^1$, , $\mathbf{E}_{s,\cup}^1$, $\mathbf{E}_{s,\cup}^2$ et $\mathbf{E}_{s,\cap}^2$ sachant que

Espace signal de $\mathbf{R}_{xx}^{c=1}(t_k)$: $\mathbf{E}_s^1\left(t_k\right) = \begin{bmatrix}\mathbf{E}_{s,\cap}^1 \\ \mathbf{E}_{s,\cup}^1\end{bmatrix}$

Espace signal de $\mathbf{R}_{xx}^{c=2}(t_k + T)$ : $\mathbf{E}_s^2\left(t_k + T\right) = \begin{bmatrix}\mathbf{E}_{s,\cup}^2 \\ \mathbf{E}_{s,\cap}^2\end{bmatrix}$

**Etape 4.A :** calculer la matrice de passage $\Omega$ tel que $\mathbf{T}_2 = \mathbf{T}_1\Omega$

$$\Omega = \left(\left(\mathbf{E}_{s,\cup}^1\right)^H \mathbf{E}_{s,\cup}^1\right)^{-1}\left(\mathbf{E}_{s,\cup}^1\right)^H \mathbf{E}_{s,\cup}^2 = \left(\mathbf{T}_k^1\right)^\# \mathbf{T}_k^2$$

**Etape 5.A :** reconstruire les espaces signaux aux instants $t_k$ et $t_k + T$

$$\mathbf{E}_s^{12}\left(t_k\right) = \mathbf{A}_{12}\mathbf{T}_k^1 = \begin{bmatrix} \mathbf{E}_{s,\cap}^1 \\ \mathbf{E}_{s,\cup}^1 \\ \mathbf{E}_{s,\cap}^2\Omega^{-1} \end{bmatrix} \text{ et } \mathbf{E}_s^{12}\left(t_k + T\right) = \mathbf{A}_{12}\mathbf{T}_k^2 = \begin{bmatrix} \mathbf{E}_{s,\cap}^1\Omega \\ \mathbf{E}_{s,\cup}^2 \\ \mathbf{E}_{s,\cap}^2 \end{bmatrix}$$

appliquer un algorithme de goniométrie.

3. Procédé selon la revendication 2 **caractérisé en ce qu'**il comporte une étape de contrôle de la validité de la commutation comprenant les étapes suivantes :

**Etape 9.C :** orthonormaliser la matrice $\mathbf{E}_s(t_k)$ pour obtenir $\tilde{\mathbf{E}}_s(t_k)$ et extraire les matrices $\mathbf{E}_c$ de la matrice $\mathbf{E}_s(t_k)$ sachant que :

$$\begin{cases} \tilde{\mathbf{E}}_c = \tilde{\mathbf{E}}_s\left(t_k\right)\left(\Psi_c,:\right) \\ \Psi_c : \text{Ensemble des indices de capteurs de la } c^{\text{ième}} \text{ commutation} \end{cases}$$

**Etape 10.C :** tester la validité de la commutation :

$$\text{Si } \frac{\sigma_{\Lambda_s}}{\overline{\lambda}_s} > \eta \text{ alors la commutation est } OK \text{ sachant que } \begin{cases} \Lambda_i = \left(\tilde{\mathbf{E}}_c\right)^\# \mathbf{R}_{xx}^c\left(t_k + (c-1)T\right)\left(\tilde{\mathbf{E}}_c^H\right)^\# \\ \overline{\lambda}_s = \dfrac{\sum_c^C trace(\Lambda_c)}{R \times C} \\ \sigma_{\Lambda_s} = \sqrt{\dfrac{\sum_i^C trace\left(\left(\Lambda_i - \overline{\Lambda}_s\right)^2\right)}{R \times C}} \end{cases}$$

où R est la dimension de l'espace signal et $\eta$ est un seuil fixé par rapport au produit matriciel BT à la dimension de l'espace signal R et au nombre de commutations C.

4. Procédé selon l'une des revendications 2 à 3 **caractérisé en ce que** l'on détermine la matrice de covariance des observations bruitées sur les deux commutations en exécutant les étapes suivantes :

**Etape 1.B :** calculer le niveau de bruit $\sigma^2$ en moyennant les valeurs propres de bruit des matrices $\mathbf{R}^1 = \mathbf{R}_{xx}^1(t_k)$ et $\mathbf{R}^2 = \mathbf{R}_{xx}^2(t_k + T)$ où $\mathbf{R}^2 = \mathbf{C}_{xx}^2(t_k + T)$ de dimension $P$x$P$,

**Etape 2.B :** ortho-normaliser les colonnes de la matrice espace signal à l'instant t pour les deux commutations $\mathbf{E}_s^{12}\left(t_k\right)$ qui ne sont pas orthonormées a priori, afin d'obtenir la matrice $\tilde{\mathbf{E}}_s^{12}\left(t_k\right)$,

**Etape 3.B :** décomposer la matrice $\tilde{\mathbf{E}}_s^{12}\left(t_k\right)$ en deux parties telle que

$$\tilde{\mathbf{E}}_s^{12}\left(t_k\right) = \begin{bmatrix} \mathbf{B}_1 \\ \mathbf{B}_2 \\ \mathbf{B}_3 \end{bmatrix} \tilde{\mathbf{T}} \quad \text{sachant que} \quad \begin{cases} \mathbf{R}^c = \tilde{\mathbf{E}}_c \boldsymbol{\Lambda}_s \left(\tilde{\mathbf{E}}_c\right)^H \quad \text{pour } 1 \le c \le 2 \\ \tilde{\mathbf{E}}_1 = \begin{bmatrix} \mathbf{B}_1 \\ \mathbf{B}_2 \end{bmatrix} \tilde{\mathbf{T}} \text{ et } \tilde{\mathbf{E}}_2 = \begin{bmatrix} \mathbf{B}_2 \\ \mathbf{B}_3 \end{bmatrix} \end{cases}$$

**Etape 4.B** : calculer la matrice diagonale $\boldsymbol{\Lambda}_s$ des valeurs propres de signal de

$$\mathbf{R}_{xx}^{12}\left(t_k\right) - \sigma^2 \mathbf{I}_{N_{12}} \quad \text{sachant que}$$

$$\mathbf{R}_{xx}^{12}\left(t_k\right) - \sigma^2 \mathbf{I}_{N_{12}} = \tilde{\mathbf{E}}_s^{12}\left(t_k\right) \boldsymbol{\Lambda}_s \tilde{\mathbf{E}}_s^{12}\left(t_k\right)^H = \begin{bmatrix} \mathbf{R}^1 - \sigma^2 \mathbf{I}_P & \\ & \mathbf{R}^2 - \sigma^2 \mathbf{I}_P \end{bmatrix} = \begin{bmatrix} \tilde{\mathbf{E}}_1 \boldsymbol{\Lambda}_s \tilde{\mathbf{E}}_1^H & \\ & \tilde{\mathbf{E}}_2 \boldsymbol{\Lambda}_s \tilde{\mathbf{E}}_2^H \end{bmatrix}$$

$$\boldsymbol{\Lambda}_s = \frac{\left(\tilde{\mathbf{E}}_1\right)^{\#}\left(\mathbf{R}^1 - \sigma^2 \mathbf{I}_P\right)\left(\tilde{\mathbf{E}}_1^H\right)^{\#} + \left(\tilde{\mathbf{E}}_2\right)^{\#}\left(\mathbf{R}^2 - \sigma^2 \mathbf{I}_P\right)\left(\tilde{\mathbf{E}}_2^H\right)^{\#}}{2}$$

**Etape 5.B** : reconstituer la matrice de covariance en effectuant $\mathbf{R}_{xx}^{12}\left(t_k\right) = \tilde{\mathbf{E}}_s^{12}\left(t_k\right) \boldsymbol{\Lambda}_s \tilde{\mathbf{E}}_s^{12}\left(t_k\right)^H + \sigma^2 \mathbf{I}_{N_{12}}$ .

appliquer un algorithme de goniométrie sur la matrice de covariance obtenue.

5. Procédé selon la revendication 2 **caractérisé en ce que** l'on exécute un nombre de commutations supérieur à 2 et l'on réalise les étapes suivantes :

On connait les espaces signaux pour la première et la deuxième commutation,

**Etape 2.C :** Initialisation à c=3 et $\mathbf{E}_s^{old}\left(t_k\right) = \mathbf{E}_s^{12}\left(t_k + T\right)$

**Etape 3.C :** calculer la moyenne temporelle $\mathbf{R}_{xx}^c(t_k + (c - 1)T)$ selon l'expression (15) sur une durée $T$ de l'observation $\mathbf{y}_c(t + t_k + (c - 1)T)$ pour $0 \le t \le T$,

décomposer en éléments propres la matrice $\mathbf{R}_{xx}^c(t_k + (c -1)T)$ pour calculer l'espace signal $\mathbf{E}_s^c(t_k)$.

**Etape 4.C :** décomposer les espaces signaux en exécutant les étapes suivantes :

- Espace signal ancien :

$$\mathbf{E}_s^{old}\left(t_k\right) = \begin{bmatrix} \mathbf{E}_{s,\cap}^{old} \\ \mathbf{E}_{s,\cup}^{old} \end{bmatrix}$$

- Espace signal de la c-ième commutation obtenu à partir de la matrice de covariance de la commutation précédente c-1, $\mathbf{R}_{xx}^c(t_k +(c - 1)T)$ :

$$\mathbf{E}_s^c\left(t_k\right) = \begin{bmatrix} \mathbf{E}_{s,\cup}^c \\ \mathbf{E}_{s,\cap}^c \end{bmatrix}$$

**Etape 5.C :** calculer la matrice de passage $\Omega$ telle que

$$\Omega = \left(\left(\mathbf{E}_{s,\cup}^{old}\right)^H \mathbf{E}_{s,\cup}^{old}\right)^{-1}\left(\mathbf{E}_{s,\cup}^{old}\right)^H \mathbf{E}_{s,\cup}^c$$

**Etape 6.C :** reconstruire les espaces signaux aux instants $t_k + (c - 2)T$ et $t_k + (c - 1)T$

$$\mathbf{E}_s^{1\ldots c}\left(t_k + (c-2)T\right) = \begin{bmatrix} \mathbf{E}_{s,\cap}^{old} \\ \mathbf{E}_{s,\cup}^{old} \\ \mathbf{E}_{s,\cap}^{c}\Omega^{-1} \end{bmatrix} \quad \text{et} \quad \mathbf{E}_s^{1\ldots c}\left(t_k + (c-1)T\right) = \begin{bmatrix} \mathbf{E}_{s,\cap}^{old}\Omega \\ \mathbf{E}_{s,\cup}^{c} \\ \mathbf{E}_{s,\cap}^{c} \end{bmatrix},$$

avec 1,...,c correspondant aux commutations de 1 à C

**Etape 7.C :** Si c<C alors c=c+1, $\mathbf{E}_s^{old}\left(t_k\right) = \mathbf{E}_s^{1\ldots c}\left(t_k + (c-1)T\right)$ et retourner à l'**Etape 3.C,**

**Etape 8.C :** sinon définir l'espace signal. $\mathbf{E}_s\left(t_k\right) = \mathbf{E}_s^{1\ldots C}\left(t_k + (C-1)T\right)$.

6. Procédé selon la revendication 5 **caractérisé en ce qu'**il comporte une étape de contrôle de validité de la commutation exécutée de la manière suivante :

**Etape 9.C :** orthonormalisation de la matrice $\mathbf{E}_s(t_k)$ pour obtenir $\tilde{\mathbf{E}}_s(t_k)$. Extraction des matrices $\mathbf{E}_c$ de la matrice $E_s(t_k)$ sachant que

$$\begin{cases} \tilde{\mathbf{E}}_c = \tilde{\mathbf{E}}_s\left(t_k\right)\left(\Psi_c,:\right) \\ \Psi_c : \text{Ensemble des indices de capteurs de la } c^{\text{ième}} \text{ commutation} \end{cases}$$

**Etape 10.C :** tester la validité de la commutation :

$$\text{Si } \frac{\sigma_{\Lambda_s}}{\overline{\lambda}_s} > \eta \text{ alors la commutation est } OK \text{ sachant que } \begin{cases} \Lambda_i = \left(\tilde{\mathbf{E}}_c\right)^{\#}\mathbf{R}_{xx}^{\;c}\left(t_k + (c-1)T\right)\left(\tilde{\mathbf{E}}_c^{\;H}\right)^{\#} \\ \overline{\lambda}_s = \dfrac{\sum\limits_{c}^{C} trace(\Lambda_c)}{R \times C} \\ \sigma_{\Lambda_s} = \sqrt{\dfrac{\sum\limits_{i}^{C} trace\left(\left(\Lambda_i - \overline{\Lambda}_s\right)^2\right)}{R \times C}} \end{cases}$$

où R est la dimension de l'espace signal et $\eta$ est un seuil fixé par rapport au produit matriciel BT à R et au nombre de commutations C,

**Etape 11.C :** définir le projecteur final $\Pi\left(t_k + (C-1)T\right) = \mathbf{E}_s\left(t_k\right)\left(\mathbf{E}_s\left(t_k\right)\right)^{\#}$.

7. Procédé selon la revendication 3 ou 6 **caractérisé en ce que** l'on prend pour la valeur de seuil $\eta = 3/\sqrt{R \times C \times BT}$ .

8. Procédé selon la revendication 5 **caractérisé en ce que** l'on détermine la matrice de covariance pour C commutations en exécutant les étapes suivantes :

**Etape 1.D :** calculer le niveau de bruit $\sigma^2$ en moyennant les valeurs propres de bruit des matrices $\mathbf{R}^c = \mathbf{R}_{xx}^{\;c}$ $(t_k + (c-1)T)$

**Etape 2.D :** Ortho-normalisation des colonnes de la matrice $\mathbf{E}_s(t_k)$ qui ne sont pas orthonormées a priori, afin d'obtenir la matrice $\tilde{\mathbf{E}}_s(t_k)$.

**Etape 3.D :** décomposer la matrice $\tilde{\mathbf{E}}_s(t_k)$ en deux parties telles que

$$\tilde{\mathbf{E}}_s(t_k) = \mathbf{E}_s(t_k)\tilde{\mathbf{T}} \text{ sachant que } \begin{cases} \mathbf{R}^c = \tilde{\mathbf{E}}_c \mathbf{\Lambda}_s (\tilde{\mathbf{E}}_c)^H \text{ pour } 1 \le c \le C \\ \tilde{\mathbf{E}}_c = \mathbf{E}_s(t_k)(\mathbf{\Psi}_c,:) \\ \mathbf{\Psi}_c : \text{Ensemble des indices de capteurs de la } c^{\text{ième}} \text{ commutation} \end{cases}$$

**Etape 4.D :** calculer la matrice diagonale $\Lambda_s$ des valeurs propres de signal de

$$\mathbf{R}_{xx}(t_k) - \sigma^2 \mathbf{I}_N \text{ sachant que}$$

$$\mathbf{R}_{xx}(t_k) - \sigma^2 \mathbf{I}_N = \tilde{\mathbf{E}}_s(t_k)\mathbf{\Lambda}_s \tilde{\mathbf{E}}_s(t_k)^H = \begin{bmatrix} \mathbf{R}^1 - \sigma^2 \mathbf{I}_P & & \\ & \ddots & \\ & & \mathbf{R}^C - \sigma^2 \mathbf{I}_P \end{bmatrix} = \begin{bmatrix} \tilde{\mathbf{E}}_1 \mathbf{\Lambda}_s \tilde{\mathbf{E}}_1^H & & \\ & \ddots & \\ & & \tilde{\mathbf{E}}_C \mathbf{\Lambda}_s \tilde{\mathbf{E}}_C^H \end{bmatrix}$$

où $\Lambda_s$ est déterminée par

$$\mathbf{\Lambda}_s = \frac{\sum_{c=1}^{C} (\tilde{\mathbf{E}}_c)^{\#} (\mathbf{R}^c - \sigma^2 \mathbf{I}_P)(\tilde{\mathbf{E}}_c^H)^{\#}}{C}$$

**Etape 5.D :** reconstituer la matrice de covariance en effectuant

$$\mathbf{R}_{xx}(t_k) = \tilde{\mathbf{E}}_s(t_k)\mathbf{\Lambda}_s \tilde{\mathbf{E}}_s(t_k)^H + \sigma^2 \mathbf{I}_N$$

9. Procédé selon l'une des revendications 1 à 8 **caractérisé en ce que** l'on applique un algorithme de goniométrie de type MUSIC ou un algorithme en diversité de polarisation pour estimer les différences valeurs d'incidences.

10. Procédé selon la revendication 8 **caractérisé en ce qu'**il comporte une étape d'auto-tarage comprenant au moins les étapes suivantes :

**Etape 1.G :** calculer sur C commutations l'espace signal $\tilde{\mathbf{E}}_s(t_k)$ selon les étapes de la revendication 8,

**Etape 2.G :** extraire de l'espace signal $\tilde{\mathbf{E}}_s^{12}(t_k + T)$ issus de la reconstitution de l'espace signal avec les deux premières commutations.

**Etape 3.G :** calculer l'espace signal $\tilde{\mathbf{E}}_s^{(c+1)(c+2)}(t_k + (C+1)T)$ de la (C+1)$^{\text{ième}}$ commutation et de la (C+2)$^{\text{ième}}$ commutation selon les étapes de la revendication 1,

**Etape 4.G :** extraire les vecteurs $\mathbf{u}_r$ et $\mathbf{v}_r$ des matrices $\tilde{\mathbf{E}}_s^{12}(t_k + T)$ et $\tilde{\mathbf{E}}_s^{(c+1)(c+2)}(t_k + (C+1)T)$ avec

$$\tilde{\mathbf{E}}_s^{12}(t_k + T) = \begin{bmatrix} \mathbf{u}_1 & \cdots & \mathbf{u}_R \end{bmatrix} \text{ et } \tilde{\mathbf{E}}_s^{(c+1)(c+2)}(t_k + (C+1)T) = \begin{bmatrix} \mathbf{v}_1 & \cdots & \mathbf{v}_R \end{bmatrix}$$

$$\mathbf{u}_r = \mathbf{V}_r \, \partial\boldsymbol{\rho} \text{ avec } \partial\boldsymbol{\rho} = \begin{bmatrix} \rho_1 / \rho_2 \\ \vdots \\ \rho_{P-1} / \rho_P \\ \rho_P / \rho_2 \end{bmatrix} \text{ et } \mathbf{V}_r = \begin{bmatrix} \mathbf{v}_r(1) & 0 & 0 \\ 0 & \ddots & 0 \\ 0 & 0 & \mathbf{v}_r(P) \\ \mathbf{v}_r(1) & 0 & 0 \\ & \ddots & \end{bmatrix}$$

**Etape 5.G :** estimer le vecteur $\partial\rho$ en calculant le vecteur propre associé à la valeur propre maximale de la matrice **Q** suivante

$$\partial \hat{\boldsymbol{\rho}} = \max_{\boldsymbol{\rho}} J(\partial \boldsymbol{\rho}) \quad \text{avec} \begin{cases} J(\partial \boldsymbol{\rho}) = \partial \boldsymbol{\rho}^H \mathbf{Q} \partial \boldsymbol{\rho} \\ \mathbf{Q} = \sum_{m=1}^{R} \mathbf{V}_r^H \mathbf{\Pi} \mathbf{V}_r \\ \mathbf{\Pi} = \tilde{\mathbf{E}}_s^{12}(t_k + T)\left(\tilde{\mathbf{E}}_s^{12}(t_k + T)^H \tilde{\mathbf{E}}_s^{12}(t_k + T)\right)^{-1} \tilde{\mathbf{E}}_s^{12}(t_k + T)^H \end{cases}$$

**Etape 5**.**G** : déduire le vecteur $\partial \rho$ des rapports $\rho_p / \rho_1$ et de la relation entre l'espace signal $\tilde{\mathbf{E}}_s(t_k)$ sans tarage et de l'espace signal $\tilde{\mathbf{E}}_s(t_k)$ en utilisant

$$\tilde{\mathbf{E}}_s^{12}(t_k + T) = \begin{bmatrix} \mathbf{\Gamma}_{11} & & \\ & \mathbf{\Gamma}_{12} & \\ & & \mathbf{\Gamma}_{22} \end{bmatrix} \mathbf{E}_s^{12}(t_k + T) \quad \text{sachant que} \begin{cases} \mathbf{\Gamma}_{11} = \begin{bmatrix} \rho_1 & 0 & 0 \\ 0 & \ddots & 0 \\ 0 & 0 & \rho_K \end{bmatrix} \text{ et } \mathbf{\Gamma}_{22} = \begin{bmatrix} \rho_{P+1} & 0 & 0 \\ 0 & \ddots & 0 \\ 0 & 0 & \rho_{K+P} \end{bmatrix} \\ \mathbf{\Gamma}_{12} = \begin{bmatrix} \rho_{K+1} & 0 & 0 \\ 0 & \ddots & 0 \\ 0 & 0 & \rho_P \end{bmatrix} \end{cases}$$

**Etape 6**.**G :** appliquer un algorithme de goniométrie à partir de $\mathbf{E}_s(t_k)$.

**Patentansprüche**

1. Goniometrieverfahren mit Signalen, die von mehreren Sendern in einem System umfassend N Empfänger (13i) und P Empfangswege Ri entsendet werden, wobei P niedriger als N ist, und das zumindest die folgenden Schritte umfasst:

• Auswahl eines ersten Unternetzwerks mit P Empfängern, Aufzeichnung der Signale oder Beobachtungen im ersten Unternetzwerk ausgehend von einem ersten Zeitpunkt $t_t$ während eines Zeitraums T,
• Auswahl eines zweiten Unternetzwerks mit P Empfängern, Aufzeichnung der Signale oder Beobachtungen im zweiten Unternetzwerk ausgehend von einem zweiten Zeitpunkt $t_k$ +T während eines gleichen Zeitraums T, bis zu einem $C^{ten}$ Unternetzwerk mit P Empfängern, Aufzeichnung der Signale oder Beobachtungen im $C^{ten}$ Unternetzwerk ausgehend von einem $C^{ten}$ Zeitpunkt $t_t$ +(C-1)T während eines gleichen Zeitraums T,
• ausgehend von der ersten Beobachtung und den folgenden Beobachtungen, die in den C Unternetzwerken aufgezeichnet wurden, Festlegung einer ersten Kovarianzmatrix der Signale $R_{xx}^1(t_k)$, die der ersten Beobachtung entspricht, und der Kovarianzmatrizen $Rxx^c(t_k+(c-1)T)$ für c, wobei $2 \le c \le C$, die der $c^{ten}$ Beobachtung entsprechen, **dadurch gekennzeichnet, dass** es für $1 \le c \le C$ Signalräume $E_s^c(t_k)$ einer jeden der Umschaltungen ausgehend von den entsprechenden Matrizen $R_{xx}^c(t_k+(c-1)T)$ festlegt, indem $E_s^{old}(t_k)=E_s^1(t_k)$ so initialisiert wird, dass bei der $c^{ten}$ Iteration $E_s^{old}(t_k)$ und $E_s^c(t_k)$ jeweils eine Untermatrix $\mathbf{E}_{s,\cup}^c$ und $\mathbf{E}_{s,\cup}^c$, von denen jede den gemeinsamen Empfängern entspricht, und eine Untermatrix $\mathbf{E}_{s,\cap}^{old}$ und $\mathbf{E}_{s,\cap}^c$ haben, von denen jede den nicht gemeinsamen Empfängern entspricht,
• ausgehend von den Unterteilen der Signalräume $\mathbf{E}_{s,\cup}^c$ und $\mathbf{E}_{s,\cup}^c$, die auf den gemeinsamen Empfängern ermittelt werden, Festlegung der Übergangsmatrix $\Omega = \left(\left(\mathbf{E}_{s,\backslash}^1\right)^H \mathbf{E}_{s,\backslash}^1\right)^{-1}\left(\mathbf{E}_{s,\backslash}^1\right)^H \mathbf{E}_{s,\backslash}^2 = \left(\mathbf{T}_k^1\right)^H \mathbf{T}_k^2$ zwischen den beiden Signalräumen, Rekonstruktion des Signalraums $\mathbf{E}_s^{1...c}\left(t_k + (c-1)T\right)$, der dem Unternetzwerk entspricht, dessen Empfängersignale zu den Zeitpunkten tk+(i-1)T für $1 \le i \le c$ aufgezeichnet wurden, und anschließend Neuberechnung von $\mathbf{E}_s^{old}(t_k)$, wobei $\mathbf{E}_s^{old}\left(t_k\right) = \mathbf{E}_s^{1...c}\left(t_k + (c-1)T\right)$, bei der $C^{ten}$ Umschaltung,

• Anwendung eines Goniometrie-Algorithmus auf den rekonstruierten Signalraum $\mathbf{E}_s^{1...C}\left(t_k+(C-1)T\right)$.

2. Verfahren nach Anspruch 1, **dadurch gekennzeichnet, dass** es zumindest die folgenden Schritte umfasst

• Festlegung der Kovarianzmatrix $\mathbf{R}_{xx}^c(t_k+(c-1)T)$ der Signale der c$^{ten}$ Umschaltung, des c$^{ten}$ Empfänger-Unternetzwerks, das zwischen den Zeitpunkten $t_k$-+(c-1)$T$ bis $t_k$+c$T$ integriert ist

$$\hat{\mathbf{R}}_{xx}^{\ c}\left(t_k\right)=\frac{1}{T}\sum_{t-1}^{T}\mathbf{y}_c\left(t+t_k\right)\mathbf{y}_c\left(t+t_k\right)^H,$$ wobei $y_c$ einer Beobachtung auf dem c$^{ten}$ Empfänger-Unternetzwerk entspricht,
• Annahme, dass die Kovarianzmatrizen, die dem Signal entsprechen, oder Beobachtungen $y_c(t_k+(c-1)T+t)$ sich wie folgt schreiben:

$$\begin{cases}\mathbf{R}_{xx}^1\left(t_k\right)=\mathbf{A}_1\mathbf{R}_{ss}\left(t_k\right)\left(\mathbf{A}_1\right)^H+\sigma^2\mathbf{I}_P\\\mathbf{R}_{xx}^c\left(t_k+(c-1)T\right)\approx\mathbf{A}_c\mathbf{R}_{ss}\left(t_k+(c-1)T\right)\left(\mathbf{A}_c\right)^H+\sigma^2\mathbf{I}_P\end{cases}\quad\text{wobei}\quad\begin{cases}\mathbf{R}_{xx}^c\left(t_k\right)=\frac{1}{T}\int_0^T E\left[\mathbf{y}_c\left(t+t_k\right)\mathbf{y}_c\left(t+t_k\right)^H\right]dt\\\mathbf{R}_{ss}\left(t_k+(c-1)T\right)\approx\mathbf{R}_{ss}\left(t_k\right)\end{cases}$$

je nach Kovarianzmatrix der Quellen und einer Matrix $A_c$, deren Spalten den Richtungsvektoren einer jeder der Quellen, die auf das c$^{ten}$ Unternetzwerk aus Empfängern treffen, entsprechen, wobei $\theta^2$ den Eigenwerten des Rauschsignals entspricht,

Schritt 1.A: Berechnung des zeitlichen Mittelwertes $R_{xx}^{c=1}(t_k)$ über einen Zeitraum T der Beobachtung $y_1(t+t_k)$ und Zerlegung in Eigenelemente $R_{xx}^{c=1}(t_k)$, um den Signalraum $E_s^1(t_k)$ bei der ersten Umschaltung zu berechnen,
Schritt 2.A: Berechnung des zeitlichen Mittelwertes $R_{xx}^{c=2}(t_k+T)$) über einen Zeitraum T der Beobachtung $y_2(t+t_k+T)$ und Zerlegung in Eigenelemente von $R_{xx}^{c=2}(t_k+T)$, um den Signalraum $E_s^2(t_k+T)$ für die zweite Umschaltung zu berechnen,

Schritt 3.A: Extraktion der Untermatrizen $\mathbf{E}_{s,\cap}^1$, $\mathbf{E}_{s,\cup}^1$, $\mathbf{E}_{s,\cup}^2$ und $\mathbf{E}_{s,\cap}^2$, wobei Signalraum von

$$\mathbf{R}_{xx}^{c=1}\left(t_k\right):\ \mathbf{E}_s^1\left(t_k\right)=\begin{bmatrix}\mathbf{E}_{s,\cap}^1\\\mathbf{E}_{s,\cup}^1\end{bmatrix}$$

$$\mathbf{R}_{xx}^{c=2}\left(t_k+T\right)\ :\ \mathbf{E}_s^2\left(t_k+T\right)=\begin{bmatrix}\mathbf{E}_{s,\cup}^2\\\mathbf{E}_{s,\cap}^2\end{bmatrix}$$

Sicrnalraum von
Schritt 4.A: Berechnung der Übergangsmatrix $\Omega$ so dass $T_2=T_1\Omega$

$$\Omega=\left(\left(\mathbf{E}_{s,\cup}^1\right)^H\mathbf{E}_{s,\cup}^1\right)^{-1}\left(\mathbf{E}_{s,\cup}^1\right)^H\mathbf{E}_{s,\cup}^2=\left(\mathbf{T}_k^1\right)^{\#}\mathbf{T}_k^2$$

Schritt 5.A: Rekonstruktion der Signalräume zu den Zeitpunkten $t_k$ und $t_k$+T

$$\mathbf{E}_s^{12}\left(t_k\right)=\mathbf{A}_{12}\mathbf{T}_k^1=\begin{bmatrix}\mathbf{E}_{s,\cap}^1\\\mathbf{E}_{s,\cup}^1\\\mathbf{E}_{s,\cap}^2\Omega^{-1}\end{bmatrix}\text{ und }\mathbf{E}_s^{12}\left(t_k+T\right)=\mathbf{A}_{12}\mathbf{T}_k^2=\begin{bmatrix}\mathbf{E}_{s,\cap}^1\Omega\\\mathbf{E}_{s,\cup}^2\\\mathbf{E}_{s,\cap}^2\end{bmatrix}$$

Anwendung eines Goniometrie-Algorithmus.

3. Verfahren nach Anspruch 2, **dadurch gekennzeichnet, dass** es einen Schritt zur Überprüfung der Gültigkeit der Umschaltung, bestehend aus den nachfolgenden Schritten, umfasst:

Schritt 9.C: Orthonormalisierung der Matrix $E_s(t_k)$, um $\tilde{E}_s(t_k)$ zu erhalten und Extraktion der Matrizen $E_c$ aus der Matrix $E_s(t_k)$, wobei:

$$\begin{cases} \tilde{\mathbf{E}}_c = \tilde{\mathbf{E}}_s\left(t_k\right)\left(\Psi_c,:\right) \\ \Psi_c : \text{Gesamtheit der Empfängerindizes der } c^{\text{ten}} \text{ Umschaltung} \end{cases}$$

Schritt 10.C: Prüfung der Gültigkeit der Umschaltung:

$$\text{Wenn } \frac{\sigma_{\Lambda_i}}{\overline{\lambda}_s} > \eta \text{ dann ist die Umschaltung OK, wobei } \begin{cases} \Lambda_i = \left(\tilde{\mathbf{E}}_c\right)^{\#} \mathbf{R}_{xx}^{\;c}\left(t_k + \left(c-1\right)T\right)\left(\tilde{\mathbf{E}}_c^{\;H}\right)^{\#} \\ \overline{\lambda}_s = \dfrac{\sum\limits_{c}^{C} trace(\Lambda_c)}{R \times C} \\ \sigma_{\Lambda_s} = \sqrt{\dfrac{\sum\limits_{i}^{C} trace\left(\left(\Lambda_i - \overline{\Lambda}_s\right)^2\right)}{R \times C}} \end{cases}$$

wobei R die Abmessung des Signalraums ist und $\eta$ eine Schwelle ist, die gegenüber dem Matrizenprodukt BT bei der Abmessung des Signalraums R und gegenüber der Anzahl an Umschaltungen C festgelegt wird.

4. Verfahren nach einem der Ansprüche 2 bis 3, **dadurch gekennzeichnet, dass** man die Kovarianzmatrix der verrauschten Beobachtungen bei den zwei Umschaltungen bestimmt, indem man die folgenden Schritte ausführt:

Schritt 1.B: Berechnung des Rauschpegels $\sigma^2$ durch Mittelung der Eigenrauschwerte der Matrizen $R^1 = R_{xx}^1(t_k)$ und $R^2 = R_{xx}^2(t_k+T)$, wobei $R^2 = C_{xx}^2(t_k+T)$ der Abmessung $PxP$,
Schritt 2.B: Orthonormalisierung der Spalten der Matrix Signalraum zum Zeitpunkt t für die beiden Umschaltungen $\mathbf{E}_s^{12}\left(t_k\right)$, die a priori nicht orthonormalisiert werden, um die Matrix $\tilde{\mathbf{E}}_s^{12}\left(t_k\right)$ zu erhalten,

Schritt 3.B: Zerlegen der Matrix $\tilde{\mathbf{E}}_s^{12}\left(t_k\right)$ in zwei Teile, so dass

$$\tilde{\mathbf{E}}_s^{12}\left(t_k\right) = \begin{bmatrix} \mathbf{B}_1 \\ \mathbf{B}_2 \\ \mathbf{B}_3 \end{bmatrix} \tilde{\mathbf{T}} \text{ wobei } \begin{cases} \mathbf{R}^c = \tilde{\mathbf{E}}_c \Lambda_s \left(\tilde{\mathbf{E}}_c\right)^H \text{ für } 1 \le c \le 2 \\ \tilde{\mathbf{E}}_1 = \begin{bmatrix} \mathbf{B}_1 \\ \mathbf{B}_2 \end{bmatrix} \tilde{\mathbf{T}} \text{ et } \tilde{\mathbf{E}}_2 = \begin{bmatrix} \mathbf{B}_2 \\ \mathbf{B}_3 \end{bmatrix} \end{cases}$$

Schritt 4.B: Berechnung der Diagonalmatrix $\Lambda_s$ der Signaleigenwerte von $R_{xx}^{12}(t_k) - \sigma^2 I_{N12}$, wobei:

$$\mathbf{R}_{xx}^{\;12}\left(t_k\right) - \sigma^2 \mathbf{I}_{N_{12}} = \tilde{\mathbf{E}}_s^{12}\left(t_k\right)\Lambda_s \tilde{\mathbf{E}}_s^{12}\left(t_k\right)^H = \begin{bmatrix} \mathbf{R}^1 - \sigma^2 \mathbf{I}_P & \\ & \mathbf{R}^2 - \sigma^2 \mathbf{I}_P \end{bmatrix} = \begin{bmatrix} \tilde{\mathbf{E}}_1 \Lambda_s \tilde{\mathbf{E}}_1^{\;H} & \\ & \tilde{\mathbf{E}}_2 \Lambda_s \tilde{\mathbf{E}}_2^{\;H} \end{bmatrix}$$

$$\Lambda_s = \frac{\left(\tilde{\mathbf{E}}_1\right)^{\#}\left(\mathbf{R}^1 - \sigma^2 \mathbf{I}_P\right)\left(\tilde{\mathbf{E}}_1^{\;H}\right)^{\#} + \left(\tilde{\mathbf{E}}_2\right)^{\#}\left(\mathbf{R}^2 - \sigma^2 \mathbf{I}_P\right)\left(\tilde{\mathbf{E}}_2^{\;H}\right)^{\#}}{2}$$

Schritt 5.B: Rekonstruktion der Kovarianzmatrix durch Ausführung von

$$\mathbf{R}_{xx}^{\ 12}\left(t_k\right)=\tilde{\mathbf{E}}_s^{12}\left(t_k\right)\Lambda_s\tilde{\mathbf{E}}_s^{12}\left(t_k\right)^H+\sigma^2\mathbf{I}_{N_{12}}.$$

Anwendung eines Goniometrie-Algorithmus auf die erhaltene Kovarianzmatrix.

5. Verfahren nach Anspruch 2, **dadurch gekennzeichnet, dass** man mehr als 2 Umschaltungen durchführt und die beiden folgenden Schritte ausführt: Die Signalräume für die erste und die zweite Umschaltung sind bekannt,

Schritt 2.C: Initialisierung auf c=3 und $\mathbf{E}_s^{old}\left(t_k\right)=\mathbf{E}_s^{12}\left(t_k+T\right)$

Schritt 3.C: Berechnung des zeitlichen Mittelwertes $R_{xx}{}^c(t_k+(c\text{-}1)T)$ nach dem Ausdruck (15) über einen Zeitraum T der Beobachtung $y_c(t+t_k+(c\text{-}1)T)$ für $0 \leq t \leq T$,
Zerlegung der Matrix $R_{xx}{}^c(t_k+c\text{-}1)T)$ in Eigenelemente, um den Signalraum $E_s{}^c(t_k)$ zu berechnen.
Schritt 4.C: Zerlegung der Signalräume durch Ausführung der folgenden Schritte:

- Alter Signalraum:

$$\mathbf{E}_s^{old}\left(t_k\right)=\begin{bmatrix}\mathbf{E}_{s,\cap}^{old}\\\mathbf{E}_{s,\cup}^{old}\end{bmatrix}$$

- Signalraum der c-ten Umschaltung, erhalten ausgehend von der Kovarianzmatrix der vorangehenden Umschaltung c-1, $R_{xx}{}^c(t_k+(c\text{-}1)T)$:

$$\mathbf{E}_s^c\left(t_k\right)=\begin{bmatrix}\mathbf{E}_{s,\cup}^c\\\mathbf{E}_{s,\cap}^c\end{bmatrix}$$

Schritt 5.C: Berechnung der Übergangsmatrix $\Omega$ so dass

$$\Omega=\left(\left(\mathbf{E}_{s,\cup}^{old}\right)^H\mathbf{E}_{s,\cup}^{old}\right)^{-1}\left(\mathbf{E}_{s,\cup}^{old}\right)^H\mathbf{E}_{s,\cup}^c$$

Schritt 6.C: Rekonstruktion der Signalräume zu den Zeitpunkten $t_k+(c\text{-}2)T$ und $t_k+(c\text{-}1)T$

$$\mathbf{E}_s^{1...c}\left(t_k+(c-2)T\right)=\begin{bmatrix}\mathbf{E}_{s,\cap}^{old}\\\mathbf{E}_{s,\cup}^{old}\\\mathbf{E}_{s,\cap}^c\Omega^{-1}\end{bmatrix}\text{ und }\mathbf{E}_s^{1...c}\left(t_k+(c-1)T\right)=\begin{bmatrix}\mathbf{E}_{s,\cap}^{old}\Omega\\\mathbf{E}_{s,\cup}^c\\\mathbf{E}_{s,\cap}^c\end{bmatrix},$$

wobei 1 ,...,c den Umschaltungen von 1 auf C entspricht

Schritt 7.C: Wenn c<C dann c=c+1, $\mathbf{E}_s^{old}\left(t_k\right)=\mathbf{E}_s^{1...c}\left(t_k+\left(c-1\right)T\right)$ und zurückkehren zu Schritt 3.C,

Schritt 8.C: ansonsten den Signalraum $\mathbf{E}_s\left(t_k\right)=\mathbf{E}_s^{1...C}\left(t_k+\left(C-1\right)T\right)$ festlegen.

6. Verfahren nach Anspruch 5, **dadurch gekennzeichnet, dass** es einen Schritt zur Überprüfung der Gültigkeit der Umschaltung umfasst, der wie folgt ausgeführt wird:

Schritt 9.C: Orthonormalisierung der Matrix $E_s(t_k)$, um $\tilde{E}_s(t_k)$ zu erhalten. Extraktion der Matrizen $E_c$ aus der

Matrix $E_s(t_k)$, wobei

$$\begin{cases} \tilde{\mathbf{E}}_c = \tilde{\mathbf{E}}_s\left(t_k\right)\left(\Psi_c,:\right) \\ \Psi_c: \text{Gesamtheit der Empfängerindizes der c}^{\text{ten}} \text{ Umschaltung} \end{cases}$$

Schritt 10.C: Prüfung der Gültigkeit der Umschaltung:

$$\text{Wenn } \frac{\sigma_{\Lambda_s}}{\overline{\lambda}_s} > \eta \text{ dann ist die Umschaltung OK, wobei } \begin{cases} \Lambda_i = \left(\tilde{\mathbf{E}}_c\right)^{\#} \mathbf{R}_{xx}^{\ c}\left(t_k + (c-1)T\right)\left(\tilde{\mathbf{E}}_c^{\ H}\right)^{\#} \\ \overline{\lambda}_s = \dfrac{\sum\limits_{c}^{C} trace(\Lambda_c)}{R \times C} \\ \sigma_{\Lambda_s} = \sqrt{\dfrac{\sum\limits_{i}^{C} trace\left(\left(\Lambda_i - \overline{\Lambda}_s\right)^2\right)}{R \times C}} \end{cases}$$

wobei R die Abmessung des Signalraums ist und $\eta$ eine Schwelle ist, die gegenüber dem Matrizenprodukt BT bei R und gegenüber der Anzahl an Umschaltungen C festgelegt wird,
Schritt 11.C: Festlegung des finalen Projektors $\Pi(t_k + C-1)T = E_s(t_k)(E_s(t_k))^{\#}$.

7. Verfahren nach Anspruch 3 oder 6, **dadurch gekennzeichnet, dass** als Grenzwert $\eta = 3/\sqrt{R \times C \times BT}$ . angenommen wird.

8. Verfahren nach Anspruch 5, **dadurch gekennzeichnet, dass** man die Kovarianzmatrix für C Umschaltungen bestimmt, indem man die folgenden Schritte ausführt:

Schritt 1.D: Berechnung des Rauschpegels $\sigma^2$ durch Mittelung der Eigenrauschwerte der Matrizen $R^c = R_{xx}^{\ c}(t_k + (c-1)T)$
Schritt 2.D: Orthonormalisierung der Spalten der Matrix $E_s(t_k)$, die a priori nicht orthonormalisiert werden, um die Matrix $\tilde{E}_s(t_k)$ zu erhalten.
Schritt 3.D: Zerlegen der Matrix $\tilde{E}_s(t_k)$ in zwei Teile, so dass

$$\tilde{\mathbf{E}}_s\left(t_k\right) = \mathbf{E}_s\left(t_k\right)\tilde{\mathbf{T}} \text{ wobei } \begin{cases} \mathbf{R}^c = \tilde{\mathbf{E}}_c \Lambda_s \left(\tilde{\mathbf{E}}_c\right)^{H} \text{ für } 1 \le c \le C \\ \tilde{\mathbf{E}}_c = \mathbf{E}_s\left(t_k\right)\left(\Psi_c,:\right) \\ \Psi_c: \text{Gesamtheit der Empfängerindizes der c}^{\text{ten}} \text{ Umschaltung} \end{cases}$$

Schritt 4.D: Berechnung der Diagonalmatrix $\Lambda_s$ der Signaleigenwerte von $R_{xx}(t_k) - \sigma^2 I_N$, wobei:

$$\mathbf{R}_{xx}(t_k) - \sigma^2 \mathbf{I}_N = \tilde{\mathbf{E}}_s(t_k)\Lambda_s\tilde{\mathbf{E}}_s(t_k)^{H} = \begin{bmatrix} \mathbf{R}^1 - \sigma^2 \mathbf{I}_P & & \\ & \ddots & \\ & & \mathbf{R}^C - \sigma^2 \mathbf{I}_P \end{bmatrix} = \begin{bmatrix} \tilde{\mathbf{E}}_1\Lambda_s\tilde{\mathbf{E}}_1^{H} & & \\ & \ddots & \\ & & \tilde{\mathbf{E}}_C\Lambda_s\tilde{\mathbf{E}}_C^{H} \end{bmatrix}$$

wobei $\Lambda_s$ bestimmt wird durch

$$\Lambda_s = \frac{\sum_{c=1}^{C} \left(\tilde{\mathbf{E}}_c\right)^{\#} \left(\mathbf{R}^c - \sigma^2 \mathbf{I}_P\right) \left(\tilde{\mathbf{E}}_c^{\ H}\right)^{\#}}{C}$$

Schritt 5.D: Rekonstruktion der Kovarianzmatrix durch Ausführung von

$$\mathbf{R}_{xx}\left(t_k\right) = \tilde{\mathbf{E}}_s\left(t_k\right) \Lambda_s \tilde{\mathbf{E}}_s\left(t_k\right)^{H} + \sigma^2 \mathbf{I}_N .$$

9. Verfahren nach einem der Ansprüche 1 bis 8, **dadurch gekennzeichnet, dass** man einen Goniometrie-Algorithmus vom Typ MUSIC oder einen Algorithmus mit Polarisationsdiversität anwendet, um die verschiedenen Einfallwerte zu ermitteln.

10. Verfahren nach Anspruch 8, **dadurch gekennzeichnet, dass** es einen Schritt zur Selbsteinstellung beinhaltet, der zumindest die folgenden Schritte umfasst:

Schritt 1.G: Berechnung des Signalraums $\tilde{\mathbf{E}}_s(t_k)$ über C Umschaltungen gemäß den Schritten nach Anspruch 8,

Schritt 2.G: Extraktion von $\tilde{\mathbf{E}}_s^{12}\left(t_k + T\right)$, stammend aus der Rekonstruktion des Signalraums mit den beiden ersten Umschaltungen, aus dem Signalraum.

Schritt 3.G: Berechnung des Signalraums $\tilde{\mathbf{E}}_s^{(c+1)(c+2)}\left(t_k + (C+1)T\right)$ der (C+1)$^{ten}$ Umschaltung und der (C+2)$^{ten}$ Umschaltung gemäß den Schritten nach Anspruch 1,

Schritt 4.G: Extraktion der Vektoren $u_r$ und $v_r$ aus den Matrizen $\tilde{\mathbf{E}}_s^{12}\left(t_k + T\right)$ und $\tilde{\mathbf{E}}_s^{(c+1)(c+2)}\left(t_k + (C+1)T\right)$, wobei

$$\tilde{\mathbf{E}}_s^{12}\left(t_k + T\right) = \begin{bmatrix} \mathbf{u}_1 & \cdots & \mathbf{u}_R \end{bmatrix} \text{ und } \tilde{\mathbf{E}}_s^{(c+1)(c+2)}\left(t_k + (C+1)T\right) = \begin{bmatrix} \mathbf{v}_1 & \cdots & \mathbf{v}_R \end{bmatrix}$$

$$\mathbf{u}_r = \mathbf{V}_r \, \partial\boldsymbol{\rho} \text{ wobei } \partial\boldsymbol{\rho} = \begin{bmatrix} \rho_1/\rho_2 \\ \vdots \\ \rho_{P-1}/\rho_P \\ \rho_P/\rho_2 \end{bmatrix} \text{ und } \mathbf{V}_r = \begin{bmatrix} \mathbf{v}_r(1) & 0 & 0 \\ 0 & \ddots & 0 \\ 0 & 0 & \mathbf{v}_r(P) \\ \mathbf{v}_r(1) & 0 & 0 \\ & \ddots & \end{bmatrix}$$

Schritt 5.G: Bestimmung des Vektors $\partial\rho$ durch Berechnung des Eigenvektors, der dem maximalen Eigenwert der folgenden Q-Matrix zugeordnet ist

$$\partial\hat{\boldsymbol{\rho}} = \max_{\boldsymbol{\rho}} J\left(\partial\boldsymbol{\rho}\right) \text{ wobei } \begin{cases} J\left(\partial\boldsymbol{\rho}\right) = \partial\boldsymbol{\rho}^{H} \mathbf{Q} \partial\boldsymbol{\rho} \\ \mathbf{Q} = \sum_{m=1}^{R} \mathbf{V}_r^{\ H} \boldsymbol{\Pi} \mathbf{V}_r \\ \boldsymbol{\Pi} = \tilde{\mathbf{E}}_s^{12}\left(t_k + T\right)\left(\tilde{\mathbf{E}}_s^{12}\left(t_k + T\right)^{H} \tilde{\mathbf{E}}_s^{12}\left(t_k + T\right)\right)^{-1} \tilde{\mathbf{E}}_s^{12}\left(t_k + T\right)^{H} \end{cases}$$

Schritt 5.G: Abziehen des Vektors $\partial\rho$ von den Verhältnissen $\rho_p/\rho_1$ und vom Bezug zwischen dem Signalraum $\tilde{\mathbf{E}}_s(t_k)$ ohne Einstellung und vom Signalraum $E_s(t_k)$ unter Verwendung von

$$\tilde{\mathbf{E}}_s^{12}\left(t_k+T\right)=\begin{bmatrix}\boldsymbol{\Gamma}_{11} & & \\ & \boldsymbol{\Gamma}_{12} & \\ & & \boldsymbol{\Gamma}_{22}\end{bmatrix}\mathbf{E}_s^{12}\left(t_k+T\right)\quad\text{wobei}\quad\begin{cases}\boldsymbol{\Gamma}_{11}=\begin{bmatrix}\rho_1 & 0 & 0 \\ 0 & \ddots & 0 \\ 0 & 0 & \rho_K\end{bmatrix}\text{ et }\boldsymbol{\Gamma}_{22}=\begin{bmatrix}\rho_{P+1} & 0 & 0 \\ 0 & \ddots & 0 \\ 0 & 0 & \rho_{K+P}\end{bmatrix} \\ \\ \boldsymbol{\Gamma}_{12}=\begin{bmatrix}\rho_{K+1} & 0 & 0 \\ 0 & \ddots & 0 \\ 0 & 0 & \rho_P\end{bmatrix}\end{cases}$$

Schritt 6.G: Anwendung eines Goniometrie-Algorithmus, ausgehend von $E_s(t_k)$.

**Claims**

1. Goniometry method for signals transmitted by a plurality of transmitters in a system comprising N sensors (13i) and P reception pathways Ri, with P less than N, and which comprises at least the following steps:

   • selecting a first sub-array of P sensors, acquiring the signals or observations on the first sub-array from a first instant $t_k$ over a duration T,
   • selecting a second sub-array of P sensors, acquiring the signals or observations on the second sub-array from a second instant $t_k+T$ over a same duration T, up to a $C^{th}$ sub-array of P sensors, acquiring the signals or observations on the $C^{th}$ sub-array from a $C^{th}$ instant $t_k+(C-1)T$ over a same duration T,
   • determining, from the first observation and from the subsequent observations acquired on the C sub-arrays, a first covariance matrix of the signals $\mathbf{R}_{xx}^1(t_k)$ corresponding to the first observation and for c such that $2\leq c\leq C$, the covariance matrices $\mathbf{R}_{xx}^c(t_k+(c-1)T)$ corresponding to the $C^{th}$ observation, **characterized in that** it determines, for $1\leq c\leq C$ signal spaces $\mathbf{E}_s^c(t_k)$ of each of the switchings from the corresponding matrices $\mathbf{R}_{xx}^c(t_k+(c-1)T)$, by initializing $\mathbf{E}_s^{old}(t_k)=\mathbf{E}_s^1(t_k)$ such that, on the $C^{th}$ iteration, $\mathbf{E}_s^{old}(t_k)$ and $\mathbf{E}_s^c(t_k)$ each have a sub-matrix $\mathbf{E}_{s,\cup}^c$ and $\mathbf{E}_{s,\cup}^c$ each corresponding to the sensors in common and a sub-matrix $\mathbf{E}_{s,\cap}^{old}$ and $\mathbf{E}_{s,\cap}^c$ each corresponding to the sensors not in common,
   • from the sub-parts of the signal spaces $\mathbf{E}_{s,\cup}^c$ and $\mathbf{E}_{s,\cup}^c$ estimated on the sensors in common, determining the transition matrix $\Omega=\left(\left(\mathbf{E}_{s,\cup}^1\right)^H\mathbf{E}_{s,\cup}^1\right)^{-1}\left(\mathbf{E}_{s,\cup}^1\right)^H\mathbf{E}_{s,\cup}^2=\left(\mathbf{T}_k^1\right)^{\#}\mathbf{T}_k^2$ between the two signal spaces, reconstructing the signal space $\mathbf{E}_s^{1...c}\left(t_k+(c-1)T\right)$ corresponding to the sub-array for which the signals from the sensors acquired at the instants tk+(i-1)T for $1\leq i\leq c$, then recalculating $\mathbf{E}_s^{old}(t_k)$ with $\mathbf{E}_s^{old}\left(t_k\right)=\mathbf{E}_s^{1...c}\left(t_k+(c-1)T\right)$, on the $C^{th}$ switching,
   • applying a goniometry algorithm to the reconstructed signal space $\tilde{\mathbf{E}}_s^{1...C}\left(t_k+(C-1)T\right)$.

2. Method according to Claim 1, **characterized in that** it comprises at least the following steps:

   • defining the covariance matrix $\mathbf{R}_{xx}^c(t_k+(c-1)T)$ of the signals of the $c^{th}$ switching, of the $c^{th}$ sub-array of sensors integrated between the instants $t_k+(c-1)T$ to $t_k+cT$ $\hat{\mathbf{R}}_{xx}^c\left(t_k\right)=\dfrac{1}{T}\sum_{t=1}^{T}\mathbf{y}_c\left(t+t_k\right)\mathbf{y}_c\left(t+t_k\right)^H$ in which $y_c$ corresponds to an observation on the $c^{th}$ sub-array of sensors,
   • assuming that the covariance matrices corresponding to the signal or observations $y_c(t_k+(c-1)T+t)$ are expressed as follows:

$$\begin{cases}\mathbf{R}_{xx}^1\left(t_k\right)=\mathbf{A}_1\mathbf{R}_{ss}\left(t_k\right)\left(\mathbf{A}_1\right)^H+\sigma^2\mathbf{I}_P \\ \mathbf{R}_{xx}^c\left(t_k+(c-1)T\right)\approx\mathbf{A}_c\mathbf{R}_{ss}\left(t_k+(c-1)T\right)\left(\mathbf{A}_c\right)^H+\sigma^2\mathbf{I}_P\end{cases}\quad\text{knowing that}\quad\begin{cases}\mathbf{R}_{xx}^c\left(t_k\right)=\dfrac{1}{T}\int_0^T E\left[\mathbf{y}_c\left(t+t_k\right)\mathbf{y}_c\left(t+t_k\right)^H\right]dt \\ \mathbf{R}_{ss}\left(t_k+(c-1)T\right)\approx\mathbf{R}_{ss}\left(t_k\right)\end{cases}$$

   as a function of the covariance matrix of the feeds and of a matrix $\mathbf{A}_c$ whose columns correspond to the directing vectors of each of the incident feeds on the $c^{th}$ sub-array of sensors, in which $\sigma^2$ corresponds to the specific values of the noise signal,

**Step 1.A:** computing the time average $\mathbf{R}_{xx}{}^{c=1}(t_k)$ over a duration T of the observation $\boldsymbol{y}_1(t+t_k)$ and breaking down into specific elements $\mathbf{R}_{xx}{}^{c=1}(t_k)$ to compute the signal space $\mathbf{E}_s{}^1(t_k)$ on the first switching,
**Step 2.A:** computing the time average $\mathbf{R}_{xx}{}^{c=2}(t_k+T))$ over a duration T of the observation $\boldsymbol{y}_2(t+t_k+T)$ and breaking down into specific elements of $\mathbf{R}_{xx}{}^{c=2}(t_k+T)$ to compute the signal space $\mathbf{E}_s{}^2(t_k+T)$ for the second switching,
**Step 3.A:** extracting the sub-matrices $\mathbf{E}_{s,\cap}^1$, $\mathbf{E}_{s,\cup}^1$, $\mathbf{E}_{s,\cup}^2$ and $\mathbf{E}_{s,\cap}^2$ knowing that

Signal space of

$$\mathbf{R}_{xx}{}^{c=1}\left(t_k\right): \ \mathbf{E}_s{}^1\left(t_k\right) = \begin{bmatrix} \mathbf{E}_{s,\cap}^1 \\ \mathbf{E}_{s,\cup}^1 \end{bmatrix}$$

Signal space of

$$\mathbf{R}_{xx}{}^{c=2}\left(t_k+T\right) \ : \ \mathbf{E}_s{}^2\left(t_k+T\right) = \begin{bmatrix} \mathbf{E}_{s,\cup}^2 \\ \mathbf{E}_{s,\cap}^2 \end{bmatrix}$$

**Step 4.A:** computing the transition matrix $\Omega$ such that $\mathbf{T}_2 = \mathbf{T}_1\Omega$

$$\Omega = \left(\left(\mathbf{E}_{s,\cup}^1\right)^H \mathbf{E}_{s,\cup}^1\right)^{-1}\left(\mathbf{E}_{s,\cup}^1\right)^H \mathbf{E}_{s,\cup}^2 = \left(\mathbf{T}_k{}^1\right)^{\#}\mathbf{T}_k{}^2$$

**Step 5.A:** reconstructing the signal spaces at the instants $t_k$ and $t_k+T$

$$\mathbf{E}_s^{12}\left(t_k\right) = \mathbf{A}_{12}\mathbf{T}_k{}^1 = \begin{bmatrix} \mathbf{E}_{s,\cap}^1 \\ \mathbf{E}_{s,\cup}^1 \\ \mathbf{E}_{s,\cap}^2\Omega^{-1} \end{bmatrix} \quad \text{and} \quad \mathbf{E}_s^{12}\left(t_k+T\right) = \mathbf{A}_{12}\mathbf{T}_k{}^2 = \begin{bmatrix} \mathbf{E}_{s,\cap}^1\Omega \\ \mathbf{E}_{s,\cup}^2 \\ \mathbf{E}_{s,\cap}^2 \end{bmatrix}$$

applying a goniometry algorithm.

3. Method according to Claim 2, **characterized in that** it comprises a step of checking the validity of the switching comprising the following steps:

**Step 9.C:** orthonormalizing the matrix $\mathbf{E}_s(t_k)$ to obtain $\tilde{\mathbf{E}}_s(t_k)$ and extracting the matrices $\mathbf{E}_c$ from the matrix $\mathbf{E}_s(t_k)$, knowing that:

$$\begin{cases} \tilde{\mathbf{E}}_c = \tilde{\mathbf{E}}_s\left(t_k\right)\left(\Psi_c,:\right) \\ \Psi_c: \text{ set of indices of sensors of the } c^{th} \text{ switching} \end{cases}$$

**Step 10.C:** testing the validity of the switching:

If $\dfrac{\sigma_{\Lambda_s}}{\bar{\lambda}_s} > \eta$ then the switching is $OK$, knowing that

$$\begin{cases} \Lambda_i = \left(\tilde{\mathbf{E}}_c\right)^{\#} \mathbf{R}_{xx}^{\ c}\left(t_k + (c-1)T\right)\left(\tilde{\mathbf{E}}_c^{\ H}\right)^{\#} \\ \bar{\lambda}_s = \dfrac{\sum\limits_c^c trace(\Lambda_c)}{R \times C} \\ \sigma_{\Lambda_s} = \sqrt{\dfrac{\sum\limits_i^c trace\left(\left(\Lambda_i - \bar{\Lambda}_s\right)^2\right)}{R \times C}} \end{cases}$$

in which R is the dimension of the signal space and $\eta$ is a fixed threshold relative to the matrix product BT, to the dimension of the signal space R and to the number of switchings C.

4. Method according to one of Claims 2 or 3, **characterized in that** the matrix of covariance of the noisy observations over the two switchings is determined by executing the following steps:

**Step 1.B:** computing the noise level $\sigma^2$ by averaging the specific noise values of the matrices $\mathbf{R}^1 = \mathbf{R}_{xx}^{\ 1}(t_k)$ and $\mathbf{R}^2 = \mathbf{R}_{xx}^{\ 2}(t_k+T)$ in which $\mathbf{R}^2 = \mathbf{C}_{xx}^{\ 2}(t_k+T)$ of dimension *PxP,*

**Step 2.B:** orthonormalizing the columns of the signal space matrix at the instant t for the two switchings $\mathbf{E}_s^{12}\left(t_k\right)$ which are not a priori orthonormed, in order to obtain the matrix $\tilde{\mathbf{E}}_s^{12}\left(t_k\right)$,

**Step 3.B:** breaking down the matrix $\tilde{\mathbf{E}}_s^{12}\left(t_k\right)$ into two parts such that

$$\tilde{\mathbf{E}}_s^{12}\left(t_k\right) = \begin{bmatrix} \mathbf{B}_1 \\ \mathbf{B}_2 \\ \mathbf{B}_3 \end{bmatrix} \tilde{\mathbf{T}} \text{ knowing that} \begin{cases} \mathbf{R}^c = \tilde{\mathbf{E}}_c \Lambda_s \left(\tilde{\mathbf{E}}_c\right)^H \text{ for } 1 \le c \le 2 \\ \tilde{\mathbf{E}}_1 = \begin{bmatrix} \mathbf{B}_1 \\ \mathbf{B}_2 \end{bmatrix} \tilde{\mathbf{T}} \text{ and } \tilde{\mathbf{E}}_2 = \begin{bmatrix} \mathbf{B}_2 \\ \mathbf{B}_3 \end{bmatrix} \end{cases}$$

**Step 4.B:** computing the diagonal matrix $\Lambda_s$ of the specific signal values of $\mathbf{R}_{xx}^{12}(t_k)$-$\sigma^2\mathbf{I}_{N_{12}}$, knowing that:

$$\mathbf{R}_{xx}^{\ 12}\left(t_k\right) - \sigma^2\mathbf{I}_{N_{12}} = \tilde{\mathbf{E}}_s^{12}\left(t_k\right)\Lambda_s\tilde{\mathbf{E}}_s^{12}\left(t_k\right)^H = \begin{bmatrix} \mathbf{R}^1 - \sigma^2\mathbf{I}_P & \\ & \mathbf{R}^2 - \sigma^2\mathbf{I}_P \end{bmatrix} = \begin{bmatrix} \tilde{\mathbf{E}}_1\Lambda_s\tilde{\mathbf{E}}_1^{\ H} & \\ & \tilde{\mathbf{E}}_2\Lambda_s\tilde{\mathbf{E}}_2^{\ H} \end{bmatrix}$$

$$\Lambda_s = \dfrac{\left(\tilde{\mathbf{E}}_1\right)^{\#}\left(\mathbf{R}^1 - \sigma^2\mathbf{I}_P\right)\left(\tilde{\mathbf{E}}_1^{\ H}\right)^{\#} + \left(\tilde{\mathbf{E}}_2\right)^{\#}\left(\mathbf{R}^2 - \sigma^2\mathbf{I}_P\right)\left(\tilde{\mathbf{E}}_2^{\ H}\right)^{\#}}{2}$$

**Step 5.B:** reconstructing the covariance matrix by performing

$$\mathbf{R}_{xx}^{\ 12}\left(t_k\right) = \tilde{\mathbf{E}}_s^{12}\left(t_k\right)\Lambda_s\tilde{\mathbf{E}}_s^{12}\left(t_k\right)^H + \sigma^2\mathbf{I}_{N_{12}}$$

applying a goniometry algorithm to the covariance matrix obtained.

5. Method according to Claim 2, **characterized in that** a number of switchings greater than 2 are executed and the following steps are carried out:

The signal spaces are known for the first and the second switchings,
    **Step 2.C:** initialization at $c=3$ and $\mathbf{E}_s^{old}\left(t_k\right) = \mathbf{E}_s^{12}\left(t_k + T\right)$
    **Step 3.C:** computing the time average $\mathbf{R}_{xx}^{\ c}(t_k+(c-1)T)$ according to the expression (15) over a duration *T*

of the observation $\mathbf{y}_c(t+t_k+(c\text{-}1)T)$ for $0 \le t \le T$,

breaking down the matrix $\mathbf{R}_{xx}{}^c(t_k + (c\text{-}1)T)$ into specific elements to compute the signal space $\mathbf{E}_s{}^c(t_k)$.

**Step 4.C:** breaking down the signal spaces by executing the following steps:

- old signal space:

$$\mathbf{E}_s^{old}\left(t_k\right) = \begin{bmatrix} \mathbf{E}_{s,\cap}^{old} \\ \mathbf{E}_{s,\cup}^{old} \end{bmatrix}$$

- signal space of the cth switching obtained from the covariance matrix of the preceding switching c-1, $\mathbf{R}_{xx}{}^c(t_k+(c\text{-}1)T)$:

$$\mathbf{E}_s^c\left(t_k\right) = \begin{bmatrix} \mathbf{E}_{s,\cup}^c \\ \mathbf{E}_{s,\cap}^c \end{bmatrix}$$

**Step 5.C:** computing the transition matrix $\Omega$ such that

$$\Omega = \left(\left(\mathbf{E}_{s,\cup}^{old}\right)^H \mathbf{E}_{s,\cup}^{old}\right)^{-1} \left(\mathbf{E}_{s,\cup}^{old}\right)^H \mathbf{E}_{s,\cup}^c$$

**Step 6.C:** reconstructing the signal spaces at the instants $t_k+(c\text{-}2)T$ and $t_k+(c\text{-}1)T$

$$\mathbf{E}_s^{1\ldots c}\left(t_k+\left(c-2\right)T\right) = \begin{bmatrix} \mathbf{E}_{s,\cap}^{old} \\ \mathbf{E}_{s,\cup}^{old} \\ \mathbf{E}_{s,\cap}^c \Omega^{-1} \end{bmatrix} \text{ and } \mathbf{E}_s^{1\ldots c}\left(t_k+\left(c-1\right)T\right) = \begin{bmatrix} \mathbf{E}_{s,\cap}^{old}\Omega \\ \mathbf{E}_{s,\cup}^c \\ \mathbf{E}_{s,\cap}^c \end{bmatrix},$$

with 1, ..., c corresponding to the switchings from 1 to C

**Step 7.C:** If c<C then c=c+1, $\mathbf{E}_s^{old}\left(t_k\right) = \mathbf{E}_s^{1\ldots c}\left(t_k+\left(c-1\right)T\right)$ and return to the **step 3.C,**

**Step 8.C:** otherwise defining the signal space. $\mathbf{E}_s\left(t_k\right) = \mathbf{E}_s^{1\ldots C}\left(t_k+\left(C-1\right)T\right)$.

6. Method according to Claim 5, **characterized in that** it comprises a step of checking the validity of the switching executed as follows:

**Step 9.C:** orthonormalizing of the matrix $\mathbf{E}_s(t_k)$ to obtain $\tilde{\mathbf{E}}_s(t_k)$.

Extraction of the matrices $\mathbf{E}_c$ from the matrix $\mathbf{E}_s(t_k)$ knowing that

$$\begin{cases} \tilde{\mathbf{E}}_c = \tilde{\mathbf{E}}_s\left(t_k\right)\left(\Psi_c,:\right) \\ \Psi_c: \text{Set of the indices of sensors of the c}^{\text{th}} \text{ switching} \end{cases}$$

**Step 10.C:** testing the validity of the switching:

If $\dfrac{\sigma_{\Lambda_s}}{\bar{\lambda}_s} > \eta$ then the switching is $OK$, knowing that

$$\begin{cases} \Lambda_i = \left(\tilde{\mathbf{E}}_c\right)^{\#} \mathbf{R}_{xx}{}^c \left(t_k + (c-1)T\right) \left(\tilde{\mathbf{E}}_c{}^H\right)^{\#} \\[2mm] \bar{\lambda}_s = \dfrac{\sum\limits_c trace(\Lambda_c)}{R \times C} \\[4mm] \sigma_{\Lambda_s} = \sqrt{\dfrac{\sum\limits_i trace\left(\left(\Lambda_i - \bar{\Lambda}_s\right)^2\right)}{R \times C}} \end{cases}$$

in which R is the dimension of the signal space and $\eta$ is a fixed threshold relative to the matrix product BT at R and to the number of switchings C,

**Step 11.C:** defining the final projector $\Pi(t_k+(C-1)T)=\mathbf{E}_s(t_k)(\mathbf{E}_s(t_k))^{\#}$.

7.  Method according to Claim 3 or 6, **characterized in that** the following is taken for the threshold value: $\eta = 3/\sqrt{R \times C \times BT}$ .

8.  Method according to Claim 5, **characterized in that** the covariance matrix for C switchings is determined by executing the following steps:

    **Step 1.D:** computing the noise level $\sigma^2$ by averaging the specific noise values of the matrices $\mathbf{R}^c = \mathbf{R}_{xx}{}^c(t_k + (c-1)T)$
    **Step 2.D:** Orthonormalizing the columns of the matrix $\mathbf{E}_s(t_k)$ which are not a priori orthonormed, in order to obtain the matrix $\tilde{\mathbf{E}}_s(t_k)$.
    **Step 3.D:** breaking down the matrix $\tilde{\mathbf{E}}_s(t_k)$ into two parts such that

$$\tilde{\mathbf{E}}_s\left(t_k\right) = \mathbf{E}_s\left(t_k\right)\tilde{\mathbf{T}} \text{ knowing that} \begin{cases} \mathbf{R}^c = \tilde{\mathbf{E}}_c \boldsymbol{\Lambda}_s \left(\tilde{\mathbf{E}}_c\right)^H \text{ for } 1 \le c \le C \\[2mm] \tilde{\mathbf{E}}_c = \mathbf{E}_s\left(t_k\right)\left(\Psi_c,:\right) \\[2mm] \Psi_c: \text{Set of the indices of sensors of the } c^{th} \text{ switching} \end{cases}$$

    **Step 4.D:** computing the diagonal matrix $\Lambda_s$ of the specific signal values of $\mathbf{R}_{xx}(t_k)-\sigma^2\mathbf{I}_N$ knowing that

$$\mathbf{R}_{xx}\left(t_k\right) - \sigma^2\mathbf{I}_N = \tilde{\mathbf{E}}_s\left(t_k\right)\Lambda_s\tilde{\mathbf{E}}_s\left(t_k\right)^H = \begin{bmatrix} \mathbf{R}^1 - \sigma^2\mathbf{I}_P & & \\ & \ddots & \\ & & \mathbf{R}^C - \sigma^2\mathbf{I}_P \end{bmatrix} = \begin{bmatrix} \tilde{\mathbf{E}}_1\Lambda_s\tilde{\mathbf{E}}_1{}^H & & \\ & \ddots & \\ & & \tilde{\mathbf{E}}_C\Lambda_s\tilde{\mathbf{E}}_C{}^H \end{bmatrix}$$

    in which $\Lambda_s$ is determined by

$$\Lambda_s = \dfrac{\sum\limits_{c=1}^{C}\left(\tilde{\mathbf{E}}_c\right)^{\#}\left(\mathbf{R}^c - \sigma^2\mathbf{I}_P\right)\left(\tilde{\mathbf{E}}_c{}^H\right)^{\#}}{C}$$

    **Step 5.D:** reconstructing the covariance matrix by performing $\mathbf{R}_{xx}(t_k)=\tilde{\mathbf{E}}_s(t_k)\Lambda_s\tilde{\mathbf{E}}_s(t_k)^H+\sigma^2\mathbf{I}_N$.

9.  Method according to one of Claims 1 to 8, **characterized in that** a goniometry algorithm of MUSIC type or a polarization diversity algorithm is applied to estimate the incidence value differences.

10. Method according to Claim 8, **characterized in that** it comprises a self-calibration step comprising at least the following steps:

**Step 1.G:** computing, over C switchings, the signal space $\tilde{\mathbf{E}}_s(t_k)$ according to the steps of Claim 8,

**Step 2.G:** extracting the signal space $\tilde{\mathbf{E}}_s^{12}\left(t_k + T\right)$ obtained from the reconstruction of the signal space with the two first switchings.

**Step 3.G:** computing the signal space $\tilde{\mathbf{E}}_s^{(c+1)(c+2)}\left(t_k + \left(C+1\right)T\right)$ of the (C+1)$^{th}$ switching and the (C+2)$^{th}$ switching according to the steps of Claim 1,

**Step 4.G:** extracting the vectors $\mathbf{u}_r$ and $\mathbf{v}_r$ of the matrices $\tilde{\mathbf{E}}_s^{12}\left(t_k + T\right)$ and $\tilde{\mathbf{E}}_s^{(c+1)(c+2)}\left(t_k + \left(C+1\right)T\right)$ with

$$\tilde{\mathbf{E}}_s^{12}\left(t_k + T\right) = \begin{bmatrix} \mathbf{u}_1 & \cdots & \mathbf{u}_R \end{bmatrix} \text{ and } \tilde{\mathbf{E}}_s^{(c+1)(c+2)}\left(t_k + \left(C+1\right)T\right) = \begin{bmatrix} \mathbf{v}_1 & \cdots & \mathbf{v}_R \end{bmatrix}$$

$$\mathbf{u}_r = \mathbf{V}_r \, \partial\boldsymbol{\rho} \text{ with } \partial\boldsymbol{\rho} = \begin{bmatrix} \rho_1/\rho_2 \\ \vdots \\ \rho_{P-1}/\rho_P \\ \rho_P/\rho_2 \end{bmatrix} \text{ and } \mathbf{V}_r = \begin{bmatrix} \mathbf{v}_r(1) & 0 & 0 \\ 0 & \ddots & 0 \\ 0 & 0 & \mathbf{v}_r(P) \\ \mathbf{v}_r(1) & 0 & 0 \\ & \ddots & \end{bmatrix}$$

**Step 5.G:** estimating the vector $\partial\rho$ by computing the specific vector associated with the maximum specific value of the following matrix **Q**

$$\partial\hat{\boldsymbol{\rho}} = \max_{\boldsymbol{\rho}} J\left(\partial\boldsymbol{\rho}\right) \text{ with } \begin{cases} J\left(\partial\boldsymbol{\rho}\right) = \partial\boldsymbol{\rho}^H \mathbf{Q} \partial\boldsymbol{\rho} \\ \mathbf{Q} = \sum_{m=1}^{R} \mathbf{V}_r^H \mathbf{\Pi} \mathbf{V}_r \\ \mathbf{\Pi} = \tilde{\mathbf{E}}_s^{12}\left(t_k + T\right)\left(\tilde{\mathbf{E}}_s^{12}\left(t_k + T\right)^H \tilde{\mathbf{E}}_s^{12}\left(t_k + T\right)\right)^{-1} \tilde{\mathbf{E}}_s^{12}\left(t_k + T\right)^H \end{cases}$$

**Step 5.G:** deducing the vector $\partial\rho$ from the ratios $\rho_p / \rho_1$ and from the relationship between the signal space $\tilde{\mathbf{E}}_s(t_k)$ without calibration and from the signal space $\mathbf{E}_s(t_k)$ by using

$$\tilde{\mathbf{E}}_s^{12}\left(t_k + T\right) = \begin{bmatrix} \mathbf{\Gamma}_{11} & \\ & \mathbf{\Gamma}_{12} \\ & & \mathbf{\Gamma}_{22} \end{bmatrix} \mathbf{E}_s^{12}\left(t_k + T\right) \text{ knowing that } \begin{cases} \mathbf{\Gamma}_{11} = \begin{bmatrix} \rho_1 & 0 & 0 \\ 0 & \ddots & 0 \\ 0 & 0 & \rho_K \end{bmatrix} \text{ and } \mathbf{\Gamma}_{22} = \begin{bmatrix} \rho_{P+1} & 0 & 0 \\ 0 & \ddots & 0 \\ 0 & 0 & \rho_{K+P} \end{bmatrix} \\ \mathbf{\Gamma}_{12} = \begin{bmatrix} \rho_{K+1} & 0 & 0 \\ 0 & \ddots & 0 \\ 0 & 0 & \rho_P \end{bmatrix} \end{cases}$$

**Step 6.G:** applying a goniometry algorithm from $\mathbf{E}_s(t_k)$.

FIG.1

FIG.2

$12_j$

$K(\underline{\Theta}_{m1})$

$\underline{\Theta}_{m1}$

$K(\underline{\Theta}_{m2})$

$\underline{\Theta}_{m2}$

10

30

# FIG.3

y

$13_2$

$13_3$

$x_2$

$y_2$

A

x

$13_1$

$13_4$

$13_3$

R

# FIG.4

$13_1$

$13_2$

$13_n$

$13_N$

R$_1$ — y$_1$(t)

R$_2$ — y$_2$(t)

R$_P$ — y$_P$(t)

50

**FIG.5**

T — T — T

t$_1$ — t$_2$ — t$_3$ — temps

| Acquisition des antennes 1 à 6 | Acquisition des antennes 5 à 10 | Acquisition des antennes 9 à 14 |
| --- | --- | --- |

61 — 62 — 63

**FIG.6**

D

δt

Voie 1 — T — δt

Voie 2 — δt

Voie 3

Voie 4

Voie n

Voie N

t$_1$ — t$_2$ — t$_3$ — t$_1$+D — t$_2$+D — temps

y$_1$(t+t$_1$) — y$_2$(t+t$_2$) — y$_3$(t+t$_3$) — y$_1$(t+t$_1$+D) — y$_2$(t+t$_2$+D)

**FIG.7**

FIG.8

## RÉFÉRENCES CITÉES DANS LA DESCRIPTION

**Documents brevets cités dans la description**

• US 7952521 B

**Littérature non-brevet citée dans la description**

• Switched-Element Direction Finding. **WEI WU et al.** IEEE Transactions on Aerospace and Electronic Systems. IEEE Service Center, vol. 45
• *Eigenstructure methods for direction finding with sensor gain and phase uncertainties ICASSP 88, New York,* vol. 5, 2681-2684

• **B.FRIEDLANDER.** *Eigenstructure methods for direction finding with sensor gain and phase uncertainties ICASSP 88, NewYork,* vol. 5, 2681-2684
• *ICASSP 88, NewYork,* vol. 5, 2681-2684